(19) Europäisches Patentamt
European Patent Office
Office européen des brevets

(11) **EP 4 386 472 B1**

(12) **EUROPEAN PATENT SPECIFICATION**

(45) Date of publication and mention
of the grant of the patent:
**26.11.2025 Bulletin 2025/48**

(21) Application number: **21958355.6**

(22) Date of filing: **22.09.2021**

(51) International Patent Classification (IPC):
**G02F 1/01** (2006.01)  **G02F 1/39** (2006.01)
**H01S 3/00** (2006.01)  **H01S 3/10** (2006.01)

(52) Cooperative Patent Classification (CPC):
**H01S 3/00; G02F 1/3551; G02F 1/392; H01S 3/10;**
G02F 2202/20; G02F 2203/13

(86) International application number:
**PCT/JP2021/034690**

(87) International publication number:
**WO 2023/047478 (30.03.2023 Gazette 2023/13)**

(54) **NEAR INFRARED PULSED LIGHT SOURCE AND TERAHERTZ WAVE GENERATION DEVICE**

NAHINFRAROT-PULSLICHTQUELLE UND TERAHERTZWELLENERZEUGUNGSVORRICHTUNG

SOURCE DE LUMIÈRE PULSÉE PROCHE INFRAROUGE ET DISPOSITIF DE GÉNÉRATION D'ONDES TÉRAHERTZ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.06.2024 Bulletin 2024/25**

(73) Proprietor: **MITSUBISHI ELECTRIC CORPORATION**
Chiyoda-ku
Tokyo 100-8310 (JP)

(72) Inventors:
• **HIROSAWA, Kenichi**
Tokyo 1008310 (JP)
• **NISHIDA, Mio**
Tokyo 1008310 (JP)
• **HASEGAWA, Kiyotomo**
Tokyo 1008310 (JP)
• **NOTAKE, Takashi**
Wako-shi, Saitama 3510198 (JP)
• **MINAMIDE, Hiroaki**
Wako-shi, Saitama 3510198 (JP)

(74) Representative: **Pfenning, Meinig & Partner mbB**
Patent- und Rechtsanwälte
An der Frauenkirche 20
01067 Dresden (DE)

(56) References cited:
JP-A- 2002 156 616    JP-A- 2002 156 616
JP-A- 2014 514 754    JP-A- 2014 514 754
JP-A- 2019 035 789    JP-A- 2019 035 789
JP-A- 2020 514 833    JP-A- 2020 514 833
US-A1- 2006 159 138    US-A1- 2006 159 138
US-A1- 2020 183 251

• KHAN M JALAL ET AL: "Ultra-sensitive, room-temperature THz detection based on parametric upconversion by using a pulsed 1550nm optical source", NONLINEAR FREQUENCY GENERATION AND CONVERSION: MATERIALS, DEVICES, AND APPLICATIONS X, SPIE, 1000 20TH ST. BELLINGHAM WA 98225-6705 USA, vol. 7917, no. 1, 10 February 2011 (2011-02-10), pages 1 - 12, XP060007055, DOI: 10.1117/12.874943
• CHAD STAUS ET AL: "Continuously phase-matched terahertz difference frequency generation in an embedded-waveguide structure supporting only fundamental modes", OPTICS EXPRESS, 18 August 2008 (2008-08-18), United States, pages 13296 - 1, XP055465565, Retrieved from the Internet <URL:https://www. osapublishing.org/DirectPDFAccess/ A7F017D7-C50B-F0C5-8835FCF45CD6 F399_170796/oe-16-17-13296.pdf?da=1& id=170796&seq=0&mobile=no> DOI: 10.1364/ OE.16.013296

- NAWATA KOUJI ET AL: "Effective Terahertz Wave Parametric Generation Depending on the Pump Pulse Width Using a LiNbO3 Crystal", IEEE TRANSACTIONS ON TERAHERTZ SCIENCE AND TECHNOLOGY, IEEE, PISCATAWAY, NJ, USA, vol. 7, no. 5, 1 September 2017 (2017-09-01), pages 617 - 620, XP011660231, ISSN: 2156-342X, [retrieved on 20170912], DOI: 10.1109/TTHZ.2017.2725479
- HAYASHI SHIN'ICHIRO ET AL: "Ultrabright continuously tunable terahertz-wave generation at room temperature", vol. 4, no. 1, 5 June 2014 (2014-06-05), XP093053532, Retrieved from the Internet <URL:https://www.nature.com/articles/srep05045> DOI: 10.1038/srep05045
- HAYASHI SHIN'ICHIRO, NAWATA KOUJI, TAIRA TAKUNORI, SHIKATA JUN-ICHI, KAWASE KODO, MINAMIDE HIROAKI: "Ultrabright continuously tunable terahertz-wave generation at room temperature", SCIENTIFIC REPORTS, vol. 4, no. 1, XP093053532, DOI: 10.1038/srep05045
- MORIGUCHI YOSHIKIYO, YU TOKIZANE, KOUJI NAWATA, YUMA TAKIDA, SHIGENORI NAGANO, HIROAKI MINAMIDE : "Optical Damage of Lithium Niobate Crystal to High-repetition-Rate Sub-Nanosecond Laser and Terahertz-Wave Generation", THE REVIEW OF LASER ENGINEERING, vol. 47, no. 1, 31 January 2019 (2019-01-31), pages 42 - 46, XP093053537, DOI: 10.2184/lsj.47.1_42

**Description**

**TECHNICAL FIELD**

The present disclosure relates to a terahertz wave generation device that generates a terahertz wave using an injection seeded terahertz-wave parametric generation (abbreviated as is-TPG hereinafter) method using a nonlinear optical crystal which can generate a terahertz wave by means of an optical parametric effect, and a near-infrared pulsed light source used for the terahertz wave generation device using the is-TPG method.

**BACKGROUND ART**

Terahertz waves are electromagnetic waves whose wavelengths are in a range from $30\mu m$ to $300\mu m$, and whose frequencies exceed 1THz.

Terahertz waves are electromagnetic waves rich in diversity, the electromagnetic waves having "degree of transparency" like that of electric waves, and "straightness" like that of laser beams, and their applicability have been expanding in various fields including a basic science field, an engineering field, and a medical biotechnology field.

A terahertz wave generation device using the is-TPG method is proposed in Patent Literature 1 as a terahertz wave generation device.

The terahertz wave generation device using the is-TPG method, which is shown in Patent Literature 1, includes a pump light generation system, a pump light guide system, a pump light amplification system, a seed light generation system, and a terahertz wave generation system.

A pump light source which constitutes the pump light generation system is a passively Q-switched microchip laser which outputs pump light whose repetition frequency is 100kHz, whose center wavelength is 1,064nm, and whose pulse width is 140ps.

Patent Literature 2 discloses a terahertz-wave generation method of generating a terahertz wave in a direction satisfying a non-collinear phase-matching condition by making pump light incident on a nonlinear optical crystal capable of generating a terahertz wave by optical parametric effect.

Paper 1 shows an ultra-sensitive, room-temperature terahertz detection based on parametric upconversion by using a pulsed 1550nm optical source.

Paper 2 discloses continuously phase-matched terahertz difference frequency generation in an embedded-waveguide structure supporting only fundamental modes.

Paper 3 discloses an effective terahertz wave parametric generation depending on the pump pulse width using a LiNbO3 crystal.

**CITATION LIST**

**PATENT LITERATURE AND PAPERS**

Patent Literature 1: JP 2019-35789 A
Patent Literature 2: US 2020/183251 A1

Paper 1: Khan et al., Ultra-sensitive, room-temperature THz detection based on parametric upconversion by using a pulsed 1550nm optical source, Proc. SPIE 7917, Nonlinear Frequency Generation and Conversion: Materials, Devices, and Applications X, 791711 (21 February 2011), DOI 10.1117/12.874943
Paper 2: Staus et al., Continuously phase-matched terahertz difference frequency generation in an embedded-waveguide structure supporting only fundamental modes, Opt Express 2008 Aug 18;16(17):13296-303, DOI 10.1364/OE.16.013296
Paper 3: Nawata et al., Effective Terahertz Wave Parametric Generation Depending on the Pump Pulse Width Using a LiNbO3 Crystal, in IEEE Transactions on Terahertz Science and Technology, vol. 7, no. 5, pp. 617-620, Sept. 2017, DOI 10.1109/TTHZ.2017.2725479

**SUMMARY OF INVENTION**

**TECHNICAL PROBLEM**

Although in the terahertz wave generation device shown in Patent Literature 1 the average pump power density of the pump light from the pump light source is set to be less than or equal to a predetermined photorefractive effect occurrence threshold in order to avoid optical damage to the nonlinear optical crystal, the suppression of the photorefractive effect is still insufficient because the microchip laser which outputs pump light whose center wavelength is 1.064nm is used as the pump light source.

Further, it is difficult to manufacture the microchip laser which outputs pump light whose pulse width is 140ps.

The present disclosure is made in view of the above-mentioned point, and it is an object of the present disclosure to provide a near-infrared pulsed light source which is easily manufactured, and which can suppress the photorefractive effect and can also suppress a nonlinear phenomenon referred to as stimulated Brillouin scattering, in the case where it is applied to a terahertz wave generation device using the is-TPG method.

## SOLUTION TO PROBLEM

The invention is set out in the appended claims. A near-infrared pulsed light source according to the present disclosure is a near-infrared pulse light source applied to a terahertz wave generation device based on a light injection terahertz-wave parametric generation method, the near-infrared pulsed light source includes: a first near-infrared light source to emit near-infrared laser light which is a continuous wave of wavelength longer than 1,240nm; and a pulse modulator to modulate the near-infrared laser light from the first near-infrared light source with pulses, and to emit, as first near-infrared light, near-infrared pulsed light whose pulse width is less than or equal to one nanosecond, and whose extinction ratio is greater than or equal to a value which is a result of adding 10dB to a pulse duty ratio (dB) which is a ratio of a pulse width of each of the pulses and a period of the pulses.

## ADVANTAGEOUS EFFECTS OF INVENTION

According to the present disclosure, the near-infrared pulsed light source applied to the terahertz wave generation device using the is-TPG method can suppress stimulated Brillouin scattering while suppressing the photorefractive effect on the nonlinear optical crystal, and can acquire near-infrared pulsed light.

## BRIEF DESCRIPTION OF DRAWINGS

FIG. 1 is a schematic diagram showing the configuration of a terahertz wave generation device according to Embodiment 1;

FIG. 2A and FIG. 2B and FIG.2C are views showing a pulse provided by a first intensity modulator, a pulse provided by a second intensity modulator, and a pulse provided by a combination of both the modulators in the terahertz wave generation device according to Embodiment 1;

FIG. 3 is a schematic diagram showing the configuration of an achromatic optical system in the terahertz wave generation device according to Embodiment 1;

FIG. 4A and FIG.4B are views showing a wave number vector of a terahertz wave in the terahertz wave generation device according to Embodiment 1;

FIG. 5 is a view for explaining the generation of a terahertz wave in a nonlinear crystal in the terahertz wave generation device according to Embodiment 1;

FIG. 6 is a schematic diagram showing the configuration of a terahertz wave generation device according to Embodiment 2; and

FIG. 7 is a schematic diagram showing the configuration of a terahertz wave generation device according to Embodiment 3.

## DESCRIPTION OF EMBODIMENTS

Embodiment 1.

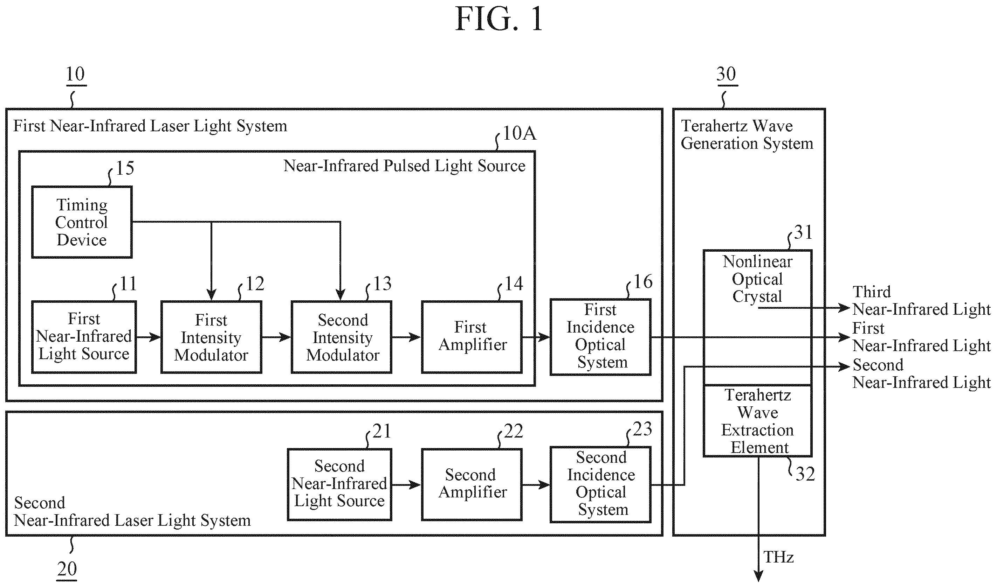

A terahertz wave generation device according to Embodiment 1 will be explained on the basis of FIGS. 1 to 5.

The terahertz wave generation device according to Embodiment 1 generates a terahertz wave using the is-TPG method which uses a nonlinear optical crystal capable of generating a terahertz wave by means of an optical parametric effect.

The is-TPG method is the one of, in order to acquire a terahertz wave of a single frequency, causing second laser light of angular frequency $\omega 2$ which satisfies the following equation (1), wherein the angular frequency of the terahertz wave to be acquired is denoted by $\omega T$ and the angular frequency of first laser pulsed light is denoted by $\omega 1$, to be incident on a nonlinear optical crystal, thereby concentrating the energy of occurrence of parametric onto the terahertz wave of the single angular frequency $\omega T$, to prevent terahertz waves of other angular frequencies from coming out.

$$\omega 1 = \omega 2 + \omega T \qquad \qquad \dots (1)$$

The single frequency refers to a state in which a single peak appears in the spectrum and coherence is maintained in the peak.

Further, the above equation (1) shows the law of energy conservation in which one photon of the angular frequency $\omega 1$ yields one photon of the angular frequency $\omega 2$ and one photon of the angular frequency $\omega T$.

When laser light of the angular frequency $\omega 1$ and laser light of the angular frequency $\omega 2$ are incident on a nonlinear optical crystal, the power of the laser light of the angular frequency $\omega 1$ decreases and the power of the laser light of the angular frequency $\omega 2$ is amplified.

In addition, the angular frequency $\omega T$ which is equal to the frequency ($\omega 1 - \omega 2$) is acquired, and the decreased power of the laser light of the angular frequency $\omega 1$ is balanced by the increase in the power of the laser light of the angular frequency $\omega 2$ and the power of the newly generated terahertz wave of the angular frequency $\omega T$ if there are no absorption and no scattering.

When the above equation (1) is satisfied, the following equation (2) is also satisfied simultaneously in terms of vectors.

In the following equation (2), k1 denotes the wave number vector of the first laser pulsed light, k2 denotes the wave number vector of the second light, and kT denotes the wave number vector of the terahertz wave.

$$k1 = k2 + kT \qquad \qquad \dots (2)$$

The direction of a wave number vector is determined by the propagating direction of the light, and the length of the vector is determined by the angular frequency and the refractive index. The refractive index varies depending on the wavelength of the light and the frequency of the terahertz wave. Further, in an anisotropic crystal, its refractive index varies depending on the propagation angles of the light and the terahertz wave with respect to the crystal orientation.

Each propagation angles of the light and the terahertz wave which simultaneously satisfy the above equations (1) and (2) are referred to as a phase matching angle.

In addition, in the is-TPG method, a pulse having intensity with which the pulse can generate a terahertz wave by itself may be used as the first laser pulsed light, and the second light may be a continuous wave (CW). Further, because the first laser pulsed light has high intensity, there occurs TPG having multiple stages in which the second light is also amplified to high intensity while a terahertz wave is generated, and the second light causes a terahertz wave and third light to occur. When the angular frequency of the third light is denoted by $\omega 3$, there is a frequency relation which satisfies the following equation (3).

$$\omega 2 = \omega 3 + \omega T \qquad \qquad \dots (3)$$

Because of TPG having such multiple stages as above, the is-TPG method can provide a terahertz wave having higher intensity with a high degree of efficiency.

More specifically, when TPG having multiple stages occurs, efficiency exceeding that given by the Manley-Rowe relations is acquired because multiple photons of a terahertz wave of the angular frequency $\omega T$ are acquired from one photon of the first laser pulse of the angular frequency $\omega 1$.

To sum up, the intensity of the first laser pulse of the angular frequency $\omega 1$ and the intensity of the terahertz wave of the angular frequency $\omega T$ exceed those given by the Manley-Rowe relations.

The Manley-Rowe relations relate to an upper limit of the efficiency in wavelength conversion, the upper limit being derived from the conservation law of photon energy, and, generally, the energy of a terahertz wave acquired is at most $\omega T/\omega 1$ of the energy of the first laser pulse.

The terahertz wave generation device according to Embodiment 1 uses the principle of the generation of a terahertz wave, the principle being based on the above-mentioned is-TPG method, and includes a first near-infrared laser light system 10, a second near-infrared laser light system 20, and a terahertz wave generation system 30, as shown in FIG. 1.

The first near-infrared laser light system 10 includes a near-infrared pulsed light source 10A and a first incidence optical system 16.

The near-infrared pulsed light source 10A includes a first near-infrared light source 11, a first intensity modulator 12 and a second intensity modulator 13 which constitute a pulse modulator, a first amplifier 14, and a timing control device 15.

The second near-infrared laser light system 20 includes a second near-infrared light source 21 and a second amplifier 22 which constitute a laser light source, and a second incidence optical system 23.

The terahertz wave generation system 30 includes a nonlinear optical crystal 31 and a terahertz wave extraction element 32.

The first near-infrared light source 11, the first intensity modulator 12, the second intensity modulator 13, and the first amplifier 14, which are included in the near-infrared pulsed light source 10A, are optically connected using optical fibers or the likes.

The second near-infrared light source 21 and the second amplifier 22 which constitute the laser light source of the second near-infrared laser light system 20 are optically connected using an optical fiber or the like.

The first near-infrared laser light system 10 performs pulse modulation on near-infrared laser light of wavelength longer than 1,240nm, to output, as first near-infrared light, near-infrared pulsed light whose pulse width is less than or equal to one nanosecond (ns), and whose extinction ratio is greater than or equal to the value which is the result of adding 10dB to the pulse duty ratio (dB) (the pulse duty ratio (dB) + 10(dB)) to the nonlinear optical crystal 31 in the terahertz wave generation system 30.

The pulse duty ratio (dB) mentioned above is the ratio (dB) of the pulse width and the pulse period of the near-infrared pulsed light emitted from the first near-infrared laser light system 10, and is expressed as the ratio of light intensity (power ratio).

Further, the first near-infrared light which is emitted from the first near-infrared laser light system 10 to the nonlinear optical crystal 31 has the intensity in which the average pump power density exceeds the photorefractive effect occurrence threshold 52kW/cm$^2$.

The first near-infrared laser light system 10 is a so-called pump light generation system.

The near-infrared pulsed light source 10A generates the first near-infrared light.

The first near-infrared light source 11 is a near-infrared laser that emits near-infrared laser light which is a continuous wave of a single frequency whose wavelength is longer than 1,240nm.

In Embodiment 1, a laser diode that emits near-infrared laser light which is a continuous wave (CW) whose wavelength is 1.5$\mu$m is used as the first near-infrared light source 11.

A laser diode in which the wavelength is within the 1.5$\mu$m band is often used for communications, and it is easy to acquire the optical component.

The wavelength of the near-infrared light emitted is not limited to within the 1.5$\mu$m band, and should just be longer than 1,240nm.

Further, the near-infrared light emitted from the first near-infrared light source 11 is not necessarily a continuous wave, and may be near-infrared laser light which is a quasi continuous wave (quasi-cw). By causing the first near-infrared light source 11 to perform a quasi-continuous-wave (quasi-cw which is abbreviated as QCW hereinafter) operation, reduction of the electric power consumption and an improvement in the peak power in the first near-infrared light source 11 can be achieved.

In the case where the first near-infrared light source 11 is caused to perform a QCW operation, control is performed by the timing control device 15.

In the present disclosure, a continuous wave includes a quasi continuous wave.

By configuring the first near-infrared light source 11 to emit near-infrared laser light of a single frequency whose wavelength is longer than 1,240nm, the photorefractive effect in the nonlinear optical crystal 31 can be suppressed because the near-infrared laser light emitted has photon energy smaller than 1.0eV.

The photorefractive effect in the nonlinear optical crystal 31 can be suppressed for the following reason: More specifically, a carrier, such as an electron, is excited inside the nonlinear optical crystal 31 because of the interaction with the light, and a movement of the carrier causes a change in the refractive index. Such a change in the refractive index caused by the light is the photorefractive effect.

The occurrence of a change in the refractive index inside the nonlinear optical crystal 31 causes a shift in the phase matching of the incident near-infrared light, and the incident near-infrared light beam becomes distorted because of a refractive index distribution, so that the nonlinear phenomenon including the generation of a terahertz wave is obstructed.

In the case where lithium niobate (LiNbO$_3$) is used as the nonlinear optical crystal 31, no absorption of the near-infrared light occurs and no carrier is generated under normal conditions because the band gap of the lithium niobate is 3.8eV.

However, when near-infrared light which is pulsed light is incident on the nonlinear optical crystal 31 in order to provide a terahertz wave, the generation of a carrier due to multiphoton absorption occurs.

Further, because there is an energy level originating in impurity or defect in the nonlinear optical crystal 31, the characteristics of the photorefractive effect are determined by such an intermediate level.

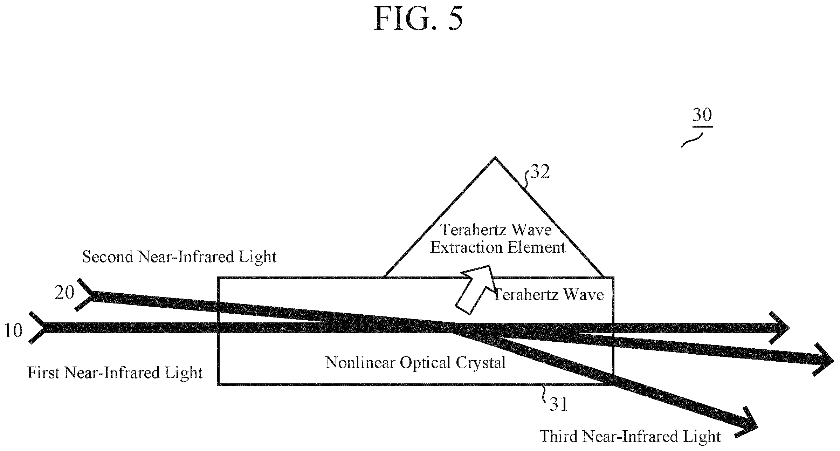

Although the mechanism of the photorefractive effect is not elucidated completely, it is said that quasi-particles caused by defects, which are called bipolarons, absorb light, and a carrier generated by this absorption causes the photorefractive effect, as shown in, for example, reference literature: M. Imlau et al. "Optical nonlinearities of small polarons in lithium niobate," Applied Physics Review Vol. 2, p. 040606 (2015), particularly in FIG. 5 and the description related to the figure.

As mentioned in the reference literature, in the case of lithium niobate, those bipolarons have an absorption peaked 2.5eV, and the absorption extends up to about 1.0eV.

Therefore, when the laser light has photon energy smaller than 1.0eV, the photorefractive effect can be significantly suppressed.

In Embodiment 1, because the wavelength of light having the photon energy of 1.0eV is approximately 1,240nm, the near-infrared laser light emitted from the first near-infrared light source 11 is set to have a wavelength longer than 1,240nm.

As a result, the photorefractive effect in the nonlinear optical crystal 31 can be suppressed.

The pulse modulator constituted by the first intensity modulator 12 and the second intensity modulator 13 performs intensity modulation on the near-infrared laser light from the first near-infrared light source 11, to generate pulsed near-infrared laser light.

The pulse modulator modulates the near-infrared laser light from the first near-infrared light source 11 with pulses, to emit, as the first near-infrared light, near-infrared pulsed light whose pulse width is less than or equal to one nanosecond, and whose extinction ratio is greater than the pulse duty ratio which is the ratio of the pulse width and the pulse period.

Because the pulse modulator emits the near-infrared pulsed light whose extinction ratio in the pulse modulation is greater than the pulse duty ratio, the power of the pulse portion contained in the total power of the near-infrared pulsed light is large.

Concretely, the pulse modulator modulates the near-infrared laser light from the first near-infrared light source 11, to emit near-infrared pulsed light whose pulse width is less than or equal to 1ns and whose extinction ratio is greater than or equal to the value which is the result of adding 10dB to the pulse duty ratio (dB) (the pulse duty ratio (dB) + 10(dB)), e.g. near-infrared pulsed light whose extinction ratio is greater than or equal to 60dB in this Embodiment 1.

For example, when the near-infrared pulsed light has a pulse width of 0.5ns and a repetition frequency of 20kHz (the pulse period is 50$\mu$s), the pulse duty ratio (dB) is the pulse width : the pulse period = 0.5ns : 50$\mu$s = 5x1$^{-10}$ : 5$\times$10$^{-5}$, that is, 50dB.

To sum up, the pulse modulator performs pulse modulation on the envelope of an electromagnetic wave that vibrates at the frequency corresponding to the wavelength of the light with a pulse width of 1ns or less, and emits modulated pulsed light whose extinction ratio in the pulse modulation is either equal to the value which is the result of adding 10dB to the duty ratio which is the ratio of the pulse width and the repetition frequency, or greater than or equal to the value which is the result of adding 10dB to the duty ratio which is the ratio of the pulse width and the repetition frequency.

By setting the extinction ratio of the near-infrared pulsed light to either the value which is the result of adding 10dB to the pulse duty ratio (dB) or the value which is the result of adding 10dB to the pulse duty ratio (dB), or more, the major portion of the total light power of the near-infrared pulsed light, e.g. 76% or more of the power in the example of Embodiment 1 is concentrated onto the pulse portion having a pulse width of 1ns or less.

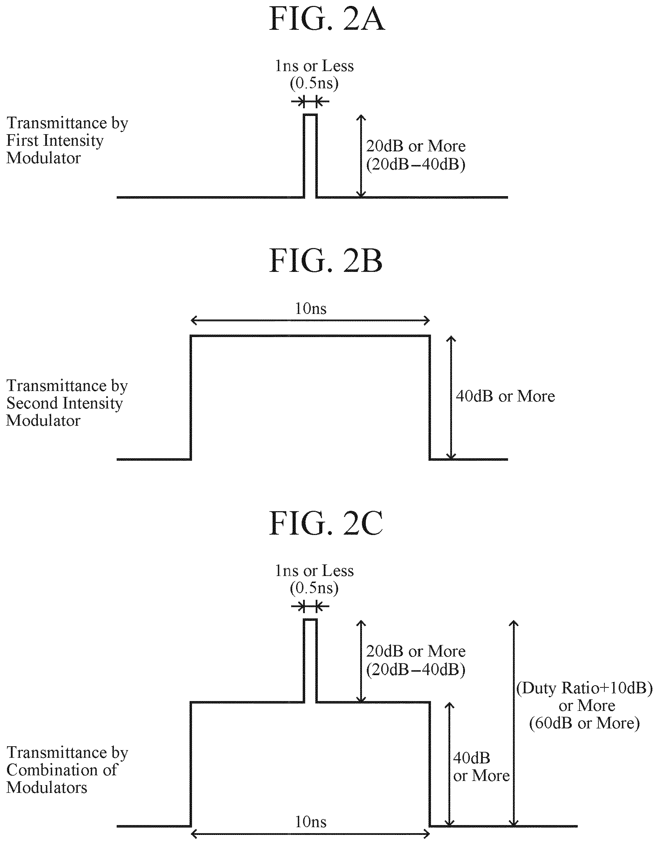

The first intensity modulator 12 is a high-speed amplitude modulator which allows the near-infrared laser light to pass therethrough with a set transmittance within each time period of 1ns or less, 0.5ns in Embodiment 1, and which prevents the near-infrared laser light from passing therethrough within each time period other than the time periods of generated pulses, thereby forming pulses, to emit near-infrared pulsed light of a high-speed repetition frequency which is acquired as a result of performing pulse modulation on the near-infrared laser light from the first near-infrared light source 11 with pulses having a pulse width of 1ns or less, as shown in FIG. 2A.

The first intensity modulator 12 is an electrooptic modulator (EO modulator) which uses the electro-optic effect (EO effect) of a lithium niobate waveguide.

By using an EO modulator as the first intensity modulator 12, near-infrared pulsed light having a repetition frequency on which the pulse modulation is performed with pulses having a pulse width of 1ns or less is acquired. There is a lithium niobate (LN) modulator as the EO modulator.

Because the first intensity modulator 12 emits near-infrared pulsed light having a repetition frequency which is acquired as a result of performing the pulse modulation on the near-infrared laser light from the first near-infrared light source 11 so that its pulse width becomes equal to or less than 1ns, the near-infrared pulsed light has a pulse width shorter than the speed of response of the stimulated Brillouin scattering in the nonlinear optical crystal 31.

As a result, even though the first near-infrared light which is the near-infrared pulsed light having high peak power is emitted toward the nonlinear optical crystal 31 from the first near-infrared laser light system 10, the stimulated Brillouin scattering in the nonlinear optical crystal 31 can be suppressed.

However, because in the case where an EO modulator is used as the first intensity modulator 12, the rejection of the light at the time of off is not sufficient, the extinction ratio is greater than or equal to 20dB, but remains in a range from 20dB to 40dB.

The extinction ratio refers to the ratio (power ratio) of the light intensity in an on state (on time) in which a pulse is generated and the light intensity in an off state (off time) in which no pulse is generated.

Assuming that the EO modulator which is the first intensity modulator 12 emits near-infrared pulsed light whose pulse width is 0.5ns (500ps) and whose repetition frequency is 20kHz, the interval between pulses, i.e., the pulse period is 50$\mu$s, and hence the pulse duty ratio which is the ratio of the on-time and the total time of the EO modulator is 50dB (the pulse width : the pulse period = 0.5ns : 50$\mu$s = $5\times10^{-10}$ : $5\times10^{-5}$, that is, 50dB).

Therefore, even though the extinction ratio of the EO modulator is 40dB, the energy contained in the output of the EO modulator within the off time is 10dB higher compared to that within the on time because the off time of the near-infrared pulsed light emitted from the EO modulator which is the first intensity modulator 12 is 50dB longer compared to the on time.

As a result, the power of the near-infrared pulsed light from the EO modulator is only 10% of the power of the near-infrared laser light from the first near-infrared light source 11, and it is inefficient to cause the nonlinear optical crystal 31 to generate a terahertz wave.

In order to improve the extinction ratio of the first near-infrared light incident on the nonlinear optical crystal 31, the second intensity modulator 13 is provided as the pulse modulator.

The second intensity modulator 13 performs modulation on the near-infrared laser light with an extinction ratio greater than or equal to 40dB.

The second intensity modulator 13 is a high-extinction-ratio amplitude modulator which allows the near-infrared laser light to pass therethrough with a set transmittance within each time period of 10ns, and which prevents the near-infrared laser light from passing therethrough within each time period other than the time periods of generated pulses, thereby forming pulses, and which performs intensity modulation on the near-infrared pulsed light from the first intensity modulator 12 with an extinction ratio greater than or equal to 40dB, as shown in FIG. 2B.

As a result, from the pulse modulator constituted by the first intensity modulator 12 and the second intensity modulator 13 is emitted the near-infrared pulsed light on which the pulse modulation is performed, the near-infrared pulsed light having an extinction ratio greater than or equal to (the pulse duty ratio (dB) + 10(dB)), e.g. 60dB in Embodiment 1, within a time period of 10ns, and having an extinction ratio greater than or equal to 20dB within a time period of 1ns or less of the time period of 10ns, e.g. within a time period of 0.5ns in Embodiment 1, as shown in FIG. 2C.

More specifically, from the pulse modulator is emitted the near-infrared pulsed light, as the first near-infrared light, which is acquired as a result of performing the pulse modulation on the near-infrared laser light, which is a continuous wave, from the first near-infrared light source 11, and which consists of a high-speed repetition frequency, the emitted near-infrared pulsed light having a pulse width of 0.5ns which is less than or equal to 1ns, and an extinction ratio of 60dB which is greater than or equal to (the pulse duty ratio (dB) + 10(dB)).

The second intensity modulator 13 is an acousto-optic modulator (AO modulator). Although the AO modulators do not have a speed of response which is high enough to be able to generate pulsed light of 1ns or less, the AO modulators can modulate near-infrared laser light with a high extinction ratio greater than or equal to 40dB.

The second intensity modulator 13 is not limited to an AO modulator, and a semiconductor optical amplifier (SOA) which has a property of performing amplification within the on time and absorbing light within the off time, i.e. which can also be used as a high-extinction-ratio intensity modulator may be used as the second intensity modulator 13.

By thus configuring the pulse modulator using a combination of the first intensity modulator 12 which is a high-speed amplitude modulator, and the second intensity modulator 13 which is a high-extinction-ratio amplitude modulator, the pulse modulation with 1ns or less is performed by the first intensity modulator 12 and the extinction ratio is further improved by 40dB or more by the second intensity modulator 13, so that the near-infrared pulsed light in which both a pulse width of 1ns or less and an extinction ratio greater than or equal to (the pulse duty ratio (dB) + 10(dB)) can be implemented simultaneously is acquired.

As a result, onto the pulse portion of the near-infrared pulsed light from the pulse modulator constituted by the first intensity modulator 12 and the second intensity modulator 13 is concentrated the major portion of the total energy.

For example, assuming that the near-infrared pulsed light whose pulse width is 0.5ns and whose repetition frequency is 20kHz is emitted from the pulse modulator, and that the peak is 1W, 500pJ$\times$20kHz=10$\mu$W is provided because the energy of the pulse portion is 500pJ and the repetition frequency is 20kHz.

In a region of 10ns around each pulse, because the second intensity modulator 13 is in the on state and the first intensity modulator 12 is in the off state, the peak drops by 20dB or more and 10mW$\times$10ns=100pJ is provided, and 100pJ$\times$20kHz=2$\mu$W is provided because the repetition frequency is 20kHz.

In any region other than the region of 10ns around each pulse, a 60dB drop occurs and 1$\mu$W is provided.

Therefore, because the power of the pulse portion used for the terahertz generation, out of the total energy of 13$\mu$W (=10+2+1), is 10$\mu$W, the concentration on the energy of the pulse portion is 76.7% of the total energy (= (10/13)$\times$100), and 76% or more of the total energy of the near-infrared pulsed light can be concentrated onto the pulse portion of the near-infrared pulsed light.

Although the connection in order from the first intensity modulator 12 which is a high-speed amplitude modulator to the second intensity modulator 13 which is a high-extinction-ratio modulator is established in Embodiment 1, the order may be reverse in such a way that a connection in order from the second intensity modulator 13 to the first intensity modulator 12 is established.

The first amplifier 14 amplifies the first near-infrared light which is the near-infrared pulsed light from the pulse modulator constituted by the first intensity modulator 12 and the second intensity modulator 13.

The first amplifier 14 is constituted by either a fiber amplifier or a combination of a fiber amplifier and an amplifier in free space.

In the case where a combination of a fiber amplifier and an amplifier in free space is used as the first amplifier 14, a nonlinear effect which is easy for short pulses to receive, such as Raman scattering or self-phase modulation, can be avoided.

The first amplifier 14 is be limited to the single stage, and may be multiple stages.

Further, in order to provide an improvement in the energy efficiency or suppress noises caused by spontaneous emission, the first amplifier 14 may be one in which QCW pumping is performed under the control of the timing control device 15.

The timing control device 15 controls the timing of the on time of each of the following modulators: the first intensity modulator 12 and the second intensity modulator 13 in such a way that the on time of the second intensity modulator 13 coincides with the on time of the first intensity modulator 12.

More specifically, the timing control device 15 controls both the emission timing of the near-infrared pulsed light from the first intensity modulator 12 and the emission timing of the near-infrared pulsed light from the second intensity modulator 13 in such a way that each pulse emitted from the first intensity modulator 12 is positioned at the center of the pulse width of a pulse emitted from the second intensity modulator 13, as shown in FIG. 2C.

The position of each pulse emitted from the first intensity modulator 12 is not limited to the center of the pulse width of a pulse emitted from the second intensity modulator 13, and may deviate from the center as long as it is within the pulse width of a pulse emitted from the second intensity modulator 13.

The timing control device 15 is constituted by a microcomputer or the like.

In the case where the first near-infrared light source 11 is made to perform a QCW operation, the timing control device 15 performs control of matching the emission timing of the near-infrared laser light of QCW from the first near-infrared light source 11 with the emission timing of the near-infrared pulsed light from the first intensity modulator 12 and the second intensity modulator 13 on the first near-infrared light source 11.

In this way, the near-infrared pulsed light source 10A which is constituted by the first near-infrared light source 11, the first intensity modulator 12, the second intensity modulator 13, the first amplifier 14, and the timing control device 15 performs the pulse modulation on the near-infrared laser light of wavelength longer than 1,240nm, to emit near-infrared pulsed light whose pulse width is 1ns or less and whose extinction ratio is greater than or equal to (the pulse duty ratio (dB) + 10(dB)), the near-infrared pulsed light having the angular frequency $\omega 1$.

In the near-infrared pulsed light source 10A configured as above, the first near-infrared light source 11 is a near-infrared laser which emits near-infrared laser light which is a continuous wave of wavelength longer than 1,240nm. Although there are no crystals for laser with good property for a wavelength longer than 1240 nm compared to those for a wavelength range of $1\mu m$, the present disclosure solves the problem that it is difficult to provide a light source that can acquire laser pulses having high intensity and a pulse width of 1ns or less by using a microchip laser.

Further, in the case where the near-infrared laser light of the first near-infrared light source 11 is a continuous wave of wavelength longer than 1,240nm, the near-infrared laser light from the first near-infrared light source 11 is modulated by the pulse modulator with pulses, and the near-infrared pulsed light whose pulse width is 1ns or less and whose extinction ratio is greater than or equal to the value which is the result of adding 10dB to the pulse duty ratio (dB) which is the ratio of the pulse width and the pulse period is incident on the nonlinear optical crystal 31 as the first near-infrared light, the average pump power density of the first near-infrared light can be made to have intensity exceeding a threshold of 52kW/cm$^2$ for photorefractive effect occurrence because the photorefractive effect in the nonlinear optical crystal 31 can be suppressed.

In addition, because the first intensity modulator 12 modulates the near-infrared laser light from the first near-infrared light source 11 to near-infrared pulsed light whose pulse width is 1ns or less, and the second intensity modulator 13 performs modulation with an extinction ratio greater than or equal to 40dB, the stimulated Brillouin scattering in the nonlinear optical crystal 31 is suppressed and the efficiency of the generation of a terahertz wave is improved in the case where the near-infrared laser light from the near-infrared pulsed light source 10A is made to be incident on the nonlinear optical crystal 31.

Further, because the pulse modulator is constituted by the first intensity modulator 12 and the second intensity modulator 13, and the second intensity modulator is configured to perform modulation on near-infrared laser light with an extinction ratio greater than or equal to 40dB, onto the pulse portion of the near-infrared pulsed light from the pulse modulator can be concentrated the major portion of the total energy of the near-infrared pulsed light.

To sum up, the near-infrared pulsed light from the near-infrared pulsed light source 10A guarantees a monochromatic characteristic in the generation of a terahertz wave for the nonlinear optical crystal 31, the photorefractive effect and the stimulated Brillouin scattering can be suppressed.

The first incidence optical system 16 in the first near-infrared laser light system 10 guides the first near-infrared light from the near-infrared pulsed light source 10A to the nonlinear optical crystal 31.

The first incidence optical system 16 has a mirror, a lens, and an isolator, and forms a laser beam path for the first near-infrared light, the path extending from an emission port of the near-infrared pulsed light source 10A to an incidence port of the nonlinear optical crystal 31, while condensing the first near-infrared light onto the inside of the nonlinear optical crystal 31 using the lens.

In the case where the first incidence optical system 16 has a lens, because a nonlinear phenomenon in the nonlinear optical crystal 31 occurs depending on the peak power density (the peak power per unit area), the beam area becomes small because of the condensing of the light onto the inside of the nonlinear optical crystal 3 using the lens, and the peak power density increases and the nonlinear phenomenon occurs easily.

The second near-infrared laser light system 20 emits near-infrared laser light which is a continuous wave having the angular frequency $\omega 2$, as second near-infrared light, to the nonlinear optical crystal 31 in the terahertz wave generation system 30.

The second near-infrared laser light system 20 is a so-called seed light generation system.

The angular frequency $\omega 2$ has a value which satisfies the above-mentioned equation (1), where the angular frequency of a terahertz wave to be acquired is denoted by $\omega T$, and the angular frequency of the first near-infrared light from the near-infrared pulsed light source 10A is denoted by $\omega 1$.

More specifically, the angular frequency $\omega 2$ has the value which is the result of subtracting the angular frequency $\omega T$ from the angular frequency $\omega 1$.

The second near-infrared light sources 21 in the second near-infrared laser light system 20 is a near-infrared laser, such as a laser diode, which generates and emits the second near-infrared light.

The second near-infrared light source 21 may be caused to perform a QCW operation, like the first near-infrared light source 11.

In the case where the second near-infrared light source 21 is caused to perform a QCW operation, the second near-infrared light source 21 is controlled by the timing control device 15.

The second amplifier 22 in the second near-infrared laser light system 20 amplifies the second near-infrared light from the second near-infrared light source 21.

The second amplifier 22 is either a fiber amplifier or a semiconductor optical amplifier (SOA).

The second amplifier 22 is not limited to the single stage, and may be two or more stages.

Further, when the power of the second near-infrared light from the second near-infrared light source 21 is not insufficient, the second amplifier 22 may be eliminated.

The second incidence optical system 23 in the second near-infrared laser light system 20 guides the second near-infrared light from the second near-infrared light source 21, the second near-infrared light being amplified by the second amplifier 22, to the nonlinear optical crystal 31.

The second incidence optical system 23 has a mirror, a lens, and an isolator, and in the case where no emission port is disposed in the second amplifier 22 or no second amplifier 22 is disposed, a laser beam path for the second near-infrared light, the path extending from an emission port of the second near-infrared light source 21 to an incidence port of the nonlinear optical crystal 31, is formed while the second near-infrared light is condensed by the lens onto the inside of the nonlinear optical crystal 31.

To acquire terahertz waves having any frequencies from the nonlinear optical crystal 31, the second near-infrared light source 21 should just be a near-infrared laser which emits each of second near-infrared light beams having multiple angular frequencies $\omega 2(1)$ to $\omega 2(n)$ (n is a natural number greater than or equal to 2) which correspond to the multiple terahertz waves to be acquired, while switching among the second near-infrared light beams.

As an alternative, a near-infrared laser which emits second near-infrared light beams whose angular frequencies $\omega 2(1)$ to $\omega 2(n)$ change multiple times with time may be provided. In this case, the angular frequency of the terahertz wave generated from the nonlinear optical crystal 31 also changes with time while satisfying the above-mentioned equation (1).

When the angular frequencies $\omega 2(1)$ to $\omega 2(n)$ of the second near-infrared light beams from the second near-infrared light source 21 change, the wavelengths of the second near-infrared light beams also change in accordance with the angular frequencies $\omega 2(1)$ to $\omega 2(n)$.

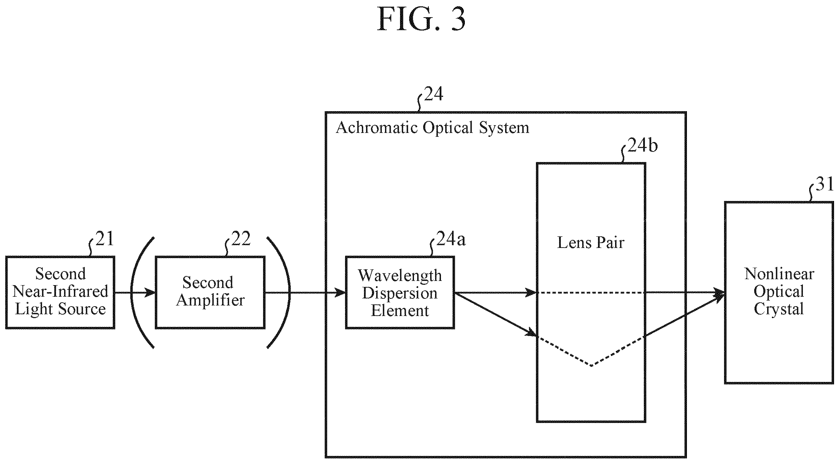

In the case where the second near-infrared light source 21 emits the second near-infrared light beams having the multiple angular frequencies $\omega 2(1)$ to $\omega 2(n)$ in this way, an achromatic optical system 24 is disposed between the second amplifier 22 and the nonlinear optical crystal 31 or between the second near-infrared light source 21 and the nonlinear optical crystal 31, as shown in FIG. 3.

The achromatic optical system 24 is designed in such a way as to meet the phase matching angles in the nonlinear optical crystal 31 even when the second near-infrared light source 21 selectively emits a second near-infrared light beam having an angular frequency out of the multiple angular frequencies $\omega 2(1)$ to $\omega 2(n)$.

More specifically, the achromatic optical system 24 is an optical system which, even when the phase matching angles change as a result of changing the angular frequency ω2 of the second near-infrared light and the angular frequency ωT of the terahertz wave, changes the angle of the second near-infrared light so as to follow the change in the phase matching angles, thereby causing the phase matching to be satisfied.

The phase matching angles refer to the propagation angles which simultaneously satisfy the above-mentioned equations (1) and (2), as mentioned above.

The achromatic optical system 24 has either a wavelength dispersion element 24a or the wavelength dispersion element 24a and a lens pair 24b.

The achromatic optical system 24 shown in FIG. 3 indicates an optical system having the wavelength dispersion element 24a and the lens pair 24b.

The wavelength dispersion element 24a changes the angle of emergence of the second near-infrared light to be emitted in accordance with the wavelength and the angular frequency of the second near-infrared light from the second near-infrared light source 21.

The wavelength dispersion element 24a includes a diffraction grating, a prism, or the like.

Here, a case in which the frequency of a terahertz wave which is desired to be acquired from the nonlinear optical crystal 31 is $f_1$THz in the range of 1THz to 5THz, and a case in which the frequency of a terahertz wave which is desired to be acquired from the nonlinear optical crystal 31 is $f_2$THz (=2x$f_1$) which is twice $f_1$THz are explained.

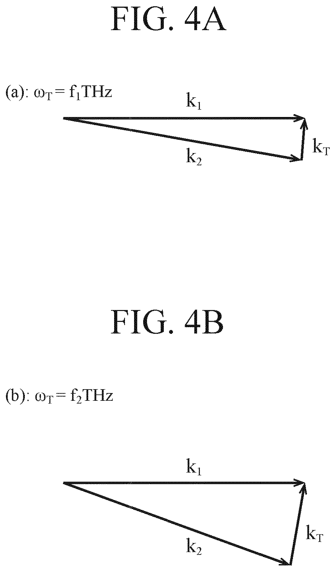

A relation among the wave number vector k1 of the first near-infrared light from the near-infrared pulsed light source 10A, the wave number vector k2 of the second near-infrared light from the second near-infrared light source 21, and the wave number vector kT of the terahertz wave generated by the nonlinear optical crystal 31, the relation being based on the law of conservation of the wave number vectors given by the above-mentioned equation (2) when the frequency of the terahertz wave is $f_1$THz, is shown in FIG. 4A.

Further, a relation among the wave number vector k1 of the first near-infrared light from the near-infrared pulsed light source 10A, the wave number vector k2 of the second near-infrared light from the second near-infrared light source 21, and the wave number vector kT of the terahertz wave generated by the nonlinear optical crystal 31, the relation being based on the law of conservation of the wave number vectors given by the above-mentioned equation (2) when the frequency of the terahertz wave is $f_2$THz, is shown in FIG. 4B.

Although the length of each wave number vector is decided by the angular frequency and the refractive index, when the frequency of the terahertz which is desired to be acquired is doubled, the length of the wave number vector of the terahertz wave nearly doubles because the refractive index does not usually change to be twice as large as before the frequency is doubled. As a result, the angle which the wave number vector k1 forms with the wave number vector k2 changes between when the frequency is $f_1$THz and when the frequency is $f_2$THz, as shown in FIGS. 4A and 4B.

The angle which the wave number vector k1 forms with the wave number vector k2 is denoted by θ, and it is assumed that the angle θ which the wave number vector k1 forms with the wave number vector k2 changes to θ+dθ when the angular frequency ωT of the terahertz wave which is desired to be acquired is changed to ωT+dωT.

When the angular frequency ω1 of the first near-infrared light from the near-infrared pulsed light source 10A is constant, it is necessary to change the angular frequency ω2 of the second near-infrared light from the second near-infrared light source 21 to ω2+dω2 in order to change the angular frequency ωT of the terahertz wave to ωT+dωT, and it is clear from the above-mentioned equation (1) that dω2=-dωT holds at this time.

It is seen from the above-mentioned relation among ωT, dωT, θ, dθ, ω2, and dω2 that when the angular frequency ω2 of the second near-infrared light is changed to ω2+dω2, it is necessary to change the angle of emergence φ of the second near-infrared light emitted from the wavelength dispersion element 24a from φ to φ+dφ, and therefore an element having dφ which causes the following equation (4) to be satisfied is selected as the wavelength dispersion element 24a.

$$d\phi/d\omega2 = d\theta/d\omega2 = -d\theta/d\omega T \qquad ... (4)$$

In the case where a diffraction grating is used as the wavelength dispersion element 24a, a diffraction grating having grooves, the number of grooves satisfying the above-mentioned equation (4), is selected.

In the case where a prism is used as the wavelength dispersion element 24a, a prism having dispersion which satisfies the above-mentioned equation (4) is selected.

By thus disposing the wavelength dispersion element 24a between the second amplifier 22 and the nonlinear optical crystal 31 or between the second near-infrared light source 21 and the nonlinear optical crystal 31, even when the angular frequency ω2 of the second near-infrared light from the second near-infrared light source 21 is changed in order to acquire multiple terahertz waves, and the phase matching angles in the nonlinear optical crystal 31 change, the angle of emergence of the second near-infrared light emitted from the wavelength dispersion element 24a changes following the change in the angular frequency ω2 of the second near-infrared light from the second near-infrared light source 21, and the phase matching in the nonlinear optical crystal 31 is maintained.

When the above-mentioned equation (4) cannot be satisfied for the wavelength dispersion element 24a, i.e.

when $d\phi/d\omega2 \neq d\theta/d\omega2$, the achromatic optical system 24 is configured in such a way that the lens pair 24b is disposed between the wavelength dispersion element 24a and the nonlinear optical crystal 31.

The lens pair 24b is constituted by two lenses whose focal positions are matched, and functions as a beam expander or a reduction optical system.

When the beam expansion ratio of the lens pair 24b is denoted by G, the angle of incidence of the second near-infrared light beam from the wavelength dispersion element 24a can be made to be 1/G.

Therefore, by configuring the lens pair 24b in such a way that the beam expansion ratio G satisfies the following equation (5), the phase matching in the nonlinear optical crystal 31 is maintained by the wavelength dispersion element 24a and the lens pair 24b even when the angular frequency $\omega2$ of the second near-infrared light from the second near-infrared light source 21 is changed in order to acquire multiple terahertz waves, and the phase matching angles in the nonlinear optical crystal 31 change.

$$G=(d\phi/d\omega2)\times(d\omega2/d\theta) \qquad\qquad ... (5)$$

Further, by, in the achromatic optical system 24, configuring the wavelength dispersion element 24a in such a way that the degree of dispersion $d\phi/d\omega2$ of the wavelength dispersion element 24a is smaller than the amount of change $d\theta/d\omega2$ of the phase matching angles, and configuring the lens pair 24b to be a reduction optical system, the beam diameter of the second near-infrared light incident on the nonlinear optical crystal 31 can be narrowed, and the nonlinear optical effect in the nonlinear optical crystal 31 can be made to be efficient.

The nonlinear optical crystal 31 in the terahertz wave generation system 30 is a lithium niobate crystal which generates a terahertz wave using the is-TPG method.

The nonlinear optical crystal 31 is not limited to a lithium niobate crystal, and should just be a nonlinear optical crystal which generates a terahertz wave using the is-TPG method.

When the first near-infrared light from the first near-infrared laser light system 10 and the second near-infrared light from the second near-infrared laser light system 20 are incident on the nonlinear optical crystal 31 at the angles which satisfy the phase matching angles, the first near-infrared light and the second near-infrared light propagate in such a way as to overlap each other inside the nonlinear optical crystal 31, and a terahertz wave is generated from the overlapping portion, as shown in FIG. 5.

The angles of incidence at which the first near-infrared light and the second near-infrared light are incident on the nonlinear optical crystal 31 are decided by the phase matching angles, and the angle of radiation of the terahertz wave is also decided by the phase matching angles.

The phase matching angles are decided by the nonlinear optical crystal 31 and the combination of the wavelengths of the first near-infrared light and the second near-infrared light, and there is a case in which the phase matching angles are zero depending on the combination.

Because the first near-infrared light from the first near-infrared laser light system 10 has high intensity, and hence the second near-infrared light and a terahertz wave are generated from the first near-infrared light, the second near-infrared light is amplified to have high intensity by the nonlinear optical crystal 31, and, as a result, the amplification of the terahertz wave is performed by the nonlinear optical crystal 31 with the second near-infrared light being used as pumping light.

As a result, as shown in FIG. 5, there occurs TPG having multiple stages in which third near-infrared light of angular frequency $\omega3$ shown by the above equation (3) is generated, and a terahertz wave and the third near-infrared light is generated from the second near-infrared light.

The generation of the third near-infrared light can acquire a terahertz wave having high intensity from the nonlinear optical crystal 31.

The terahertz wave extraction element 32 in the terahertz wave generation system 30 extracts the terahertz wave generated by the nonlinear optical crystal 31.

The terahertz wave extraction element 32 is a prism made from a material, such as silicon, having a high refractive index and little absorption for terahertz waves, and is mounted to the nonlinear optical crystal 31.

Because many types of nonlinear optical crystals 31 have absorption of terahertz waves, and have a high refractive index in a frequency range of terahertz waves, there is a possibility that a terahertz wave propagates over a long distance inside a nonlinear optical crystal and is absorbed with being confined inside the nonlinear optical crystal because of total reflection.

Because the terahertz wave extraction element 32 is mounted to the nonlinear optical crystal 31, the terahertz wave generated inside the nonlinear optical crystal 31 is escaped toward the terahertz wave extraction element 32, and is emitted from the terahertz wave generation system 30 while being prevented from being absorbed inside the nonlinear optical crystal 31.

In the case where a nonlinear optical crystal having little absorption of terahertz waves is used as the nonlinear optical crystal 31, it is not necessary to mount the terahertz wave extraction element 32 to the nonlinear optical crystal 31.

Next, the operation of the terahertz wave generation device according to Embodiment 1 will be explained.

First, the operation of the first near-infrared laser light system 10 will be explained.

Near-infrared laser light which is emitted from the first near-infrared light source 11 and which is a continuous wave of a single frequency whose wavelength is longer than 1,240nm is modulated by the first intensity modulator 12 to near-infrared pulsed light which consists of a high-speed repetition frequency, the near-infrared pulsed light having a pulse width of 1ns or less, and is then emitted.

The near-infrared pulsed light modulated by the first intensity modulator 12 is intensity-modulated by the second intensity modulator 13, and is emitted as near-infrared pulsed light whose extinction ratio is greater than or equal to (the pulse duty ratio (dB) + 10(dB)).

The near-infrared pulsed light modulated by the second intensity modulator 13 is amplified by the first amplifier 14 and is then emitted.

As a result, from the near-infrared pulsed light source 10A including the first near-infrared light source 11, the first intensity modulator 12, the second intensity modulator 13, and the first amplifier 14 is emitted the near-infrared pulsed light of angular frequency $\omega 1$, whose pulse width is 1ns or less and whose extinction ratio is greater than or equal to (the pulse duty ratio (dB) + 10(dB)), after the near-infrared pulsed light has been acquired as a result of performing the pulse modulation on the near-infrared laser light of wavelength longer than 1,240nm.

The near-infrared pulsed light emitted from the near-infrared pulsed light source 10A is guided to the first incidence optical system 16, and is incident, as the first near-infrared light, on the nonlinear optical crystal 31 in the terahertz wave generation system 30.

On the other hand, the second near-infrared laser light system 20 operates as follows.

From the second near-infrared light source 21 is emitted near-infrared laser light which is a continuous wave having the angular frequency $\omega 2$.

The near-infrared laser light emitted from the second near-infrared light source 21 is amplified by the second amplifier 22 and is then emitted.

The near-infrared pulsed light emitted from the second amplifier 22 is guided to the second incidence optical system 23, and is incident, as the second near-infrared light, on the nonlinear optical crystal 31 in the terahertz wave generation system 30.

In the case where the second near-infrared light source 21 emits near-infrared laser light beams whose angular frequencies $\omega 2(1)$ to $\omega 2(n)$ change multiple times with time, the near-infrared laser light from the second near-infrared light source 21 is made to be incident on the second incidence optical system 23 with its angle of emergence being changed by the achromatic optical system 24.

When the first near-infrared light of the angular frequency $\omega 1$ which is the near-infrared pulsed light emitted from the first near-infrared laser light system 10, and the second near-infrared light of the angular frequency $\omega 2$ which is the near-infrared laser light emitted from the second near-infrared laser light system 20 are incident on the nonlinear optical crystal 31, the nonlinear optical crystal 31 generates a terahertz wave of the angular frequency $\omega T$.

In the nonlinear optical crystal 31, the second near-infrared light and a terahertz wave are generated from the first near-infrared light, and therefore the second near-infrared light is amplified and the amplification of the terahertz wave in which the second near-infrared light is used as the pumping light is performed as a result.

As a result, the third near-infrared light of the angular frequency $\omega 3$ is generated.

The generation of the third near-infrared light causes a terahertz wave having high intensity to be generated from the nonlinear optical crystal 31.

The terahertz wave of the angular frequency $\omega T$ which is generated by the nonlinear optical crystal 31 is extracted by the terahertz wave extraction element 32, and is emitted from the terahertz wave generation system 30.

As mentioned above, because the near-infrared pulsed light source 10A in the terahertz wave generation device according to Embodiment 1 includes the first near-infrared light source 11 and the pulse modulator, and the first near-infrared light source 11 emits near-infrared laser light which is a continuous wave of wavelength longer than 1,240nm, it is easy to manufacture the near-infrared pulsed light source, the photorefractive effect in the nonlinear optical crystal 31 can be suppressed in the case of causing the near-infrared laser light from the near-infrared pulsed light source 10A to be incident on the nonlinear optical crystal 31, and the stimulated Brillouin scattering is suppressed and the efficiency of the generation of a terahertz wave from the nonlinear optical crystal 31 is improved because the pulse modulator receives the near-infrared laser light from the first near-infrared light source 11 and emits near-infrared pulsed light having a pulse width of 1ns or less as the first near-infrared light.

Further, by configuring the pulse modulator to have the first intensity modulator 12 to modulate near-infrared laser light to near-infrared pulsed light which consists of a high-speed repetition frequency, this near-infrared pulsed light having a pulse width of 1ns or less, and the second intensity modulator 13 to modulate near-infrared laser light with an extinction ratio greater than or equal to 40dB, the pulse modulation with a pulse width of 1ns or less is performed by the first intensity modulator 12 and the extinction ratio is improved by the second intensity modulator 13, so that the pulse width of 1ns or less and the extinction ratio greater than or equal to (the pulse duty ratio (dB) + 10(dB)) can be implemented simultaneously, and onto the pulse portion of the near-infrared pulsed light from the pulse modulator can be concentrated the major portion of the total energy.

In addition, the terahertz wave generation device according to Embodiment 1 which includes the near-infrared pulsed light source 10A configured in this way can acquire a terahertz wave of a single frequency with a high degree of efficiency using the is-TPG method.

In the case where the second near-infrared laser light system 20 in the terahertz wave generation device is configured to have the second near-infrared light source 21 and the achromatic optical system 24, and the second near-infrared light source 21 is configured to be a near-infrared laser that emits each of second near-infrared light beams having multiple angular frequencies $\omega2(1)$ to $\omega2(n)$ while switching among the second near-infrared light beams, the frequency of the terahertz wave generated from the terahertz wave generation system 30 can be changed.

The terahertz wave generation device which is thus configured to be able to emit a terahertz wave of a single frequency which can be varied is useful when performing spectroscopy or the like using a terahertz wave.

Embodiment 2.

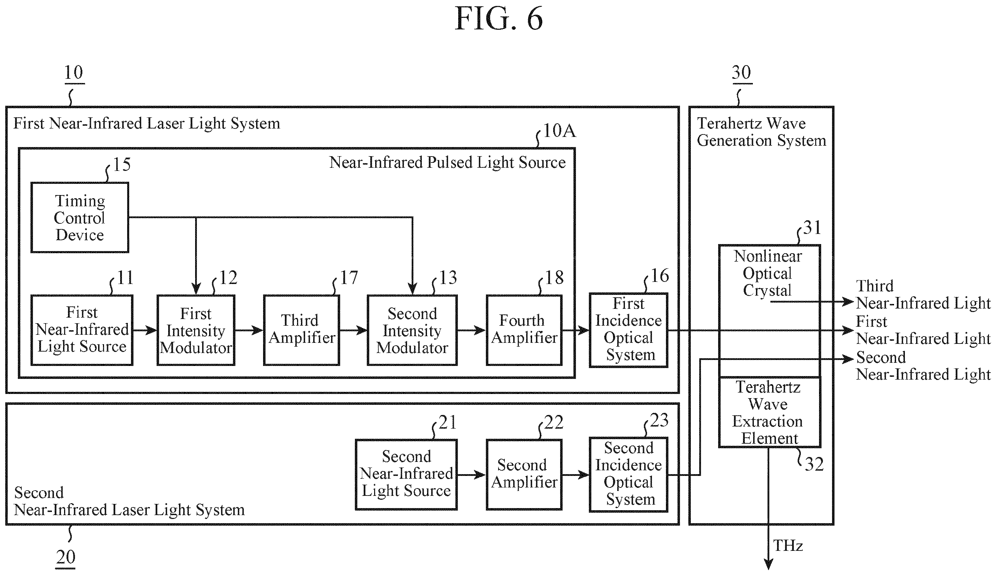

A terahertz wave generation device according to Embodiment 2 will be explained on the basis of FIG. 6.

The terahertz wave generation device according to Embodiment 2 differs from the terahertz wave generation device according to Embodiment 1 in that a third amplifier 17 and a fourth amplifier 18 are disposed, while the terahertz wave generation device according to Embodiment 2 is the same as the terahertz wave generation device according to Embodiment 1 in other components.

In FIG. 6, the same reference signs as those in FIG. 1 denote the same components or like components.

The terahertz wave generation device according to Embodiment 2 uses the principle of the generation of a terahertz wave, the principle being based on the above-mentioned is-TPG method, and includes a first near-infrared laser light system 10, a second near-infrared laser light system 20, and a terahertz wave generation system 30, as shown in FIG. 6.

The first near-infrared laser light system 10 includes a near-infrared pulsed light source 10A and a first incidence optical system 16.

The near-infrared pulsed light source 10A includes a first near-infrared light source 11, a first intensity modulator 12 and a second intensity modulator 13 which constitute a pulse modulator, the third amplifier 17 disposed between the first intensity modulator 12 and the second intensity modulator 13, the fourth amplifier 18, and a timing control device 15.

The second near-infrared laser light system 20 includes a second near-infrared light source 21 and a second amplifier 22 which constitute a laser light source, and a second incidence optical system 23, and is the same as the second near-infrared laser light system 20 in the terahertz wave generation device according to Embodiment 1.

The terahertz wave generation system 30 includes a nonlinear optical crystal 31 and a terahertz wave extraction element 32, and is the same as the terahertz wave generation system 30 in the terahertz wave generation device according to Embodiment 1.

Therefore, an explanation will be made hereinafter, focusing on the third amplifier 17 and the fourth amplifier 18.

The third amplifier 17 amplifies near-infrared pulsed light from the first intensity modulator 12, and emits the near-infrared pulsed light amplified thereby to the second intensity modulator 13.

The third amplifier 17 is configured as either a fiber amplifier or a combination of a fiber amplifier and an amplifier in free space.

The third amplifier 17 is not limited to the single stage, and may be two or more stages.

Because the third amplifier 17 is disposed between the first intensity modulator 12 and the second intensity modulator 13, the generation of amplified spontaneous emission (ASE) in the third amplifier 17 can be suppressed, and the third amplifier 17 can efficiently amplify the near-infrared pulsed light from the first intensity modulator 12 and emit the near-infrared pulsed light amplified thereby to the second intensity modulator 13.

ASE is a phenomenon in which an amplifier amplifies spontaneous emission light occurring therein, and when the power level of light incident on the amplifier is close to that of spontaneous emission light, ASE easily occurs and the amplification efficiency of the amplifier is reduced.

Because the third amplifier 17 receives the near-infrared pulsed light incident thereon from the first intensity modulator 12, the difference between the power level of the near-infrared pulsed light from the first intensity modulator 12 and that of spontaneous emission light is large, and therefore the generation of ASE in the third amplifier 17 can be suppressed and the third amplifier 17 can perform efficient amplification.

Further, although ASE occurs strongly between pulses, the second intensity modulator 13 can prevent or remove the transmission of spontaneous emission light during a time period within which ASE occurs strongly with a high extinction ratio.

The fourth amplifier 18 amplifies first near-infrared light which is near-infrared pulsed light from the pulse modulator constituted by the first intensity modulator 12, the second intensity modulator 13, and the third amplifier 17, and emits the near-infrared pulsed light amplified thereby to the first incidence optical system 16.

The fourth amplifier 18 is configured as either a fiber amplifier or a combination of a fiber amplifier and an amplifier in free space.

The fourth amplifier 18 is not limited to the single stage, and may be two or more stages.

When the second intensity modulator 13 has a damage threshold and the near-infrared pulsed light cannot be amplified to sufficient intensity by the third amplifier 17, the fourth amplifier 18 amplifies the near-infrared pulsed light from the pulse modulator to sufficient intensity, and when sufficient peak intensity is not provided for each pulse because the transmittance is not 100% even when the second intensity modulator 13 is on, the fourth amplifier 18 amplifies each pulse of the near-infrared pulsed light from the pulse modulator to sufficient peak intensity.

When the intensity of the near-infrared pulsed light from the pulse modulator and the peak intensity of each pulse are sufficiently provided by the third amplifier 17, it is not necessary to dispose the fourth amplifier 18.

Although the connection in order from the first intensity modulator 12 which is a high-speed amplitude modulator to the second intensity modulator 13 which is a high-extinction-ratio modulator is established, the order may be reverse in such a way that a connection in order from the second intensity modulator 13 to the first intensity modulator 12 is established.

Even in this case, because the third amplifier 17 receives the near-infrared pulsed light incident thereon from the second intensity modulator 13, the pulse width of the incident near-infrared pulsed light is long and the average power of the incident near-infrared pulsed light is high, and therefore the generation of ASE in the third amplifier 17 can be suppressed and the third amplifier 17 can perform efficient amplification.

Next, the operation of the terahertz wave generation device according to Embodiment 2 will be explained.

First, the operation of the first near-infrared laser light system 10 will be explained.

Near-infrared laser light which is emitted from the first near-infrared light source 11 and which is a continuous wave of a single frequency whose wavelength is longer than 1,240nm is modulated by the first intensity modulator 12 to near-infrared pulsed light which consists of a high-speed repetition frequency, the near-infrared pulsed light having a pulse width of 1ns or less, and is then emitted.

The near-infrared pulsed light on which the pulse modulation is performed by the first intensity modulator 12 is amplified by the third amplifier 17 and is then emitted to the second intensity modulator 13, and is intensity-modulated by the second intensity modulator 13 and is emitted as near-infrared pulsed light whose extinction ratio is greater than or equal to (the pulse duty ratio (dB) + 10 (dB)).

The near-infrared pulsed light modulated by the second intensity modulator 13 is amplified by the fourth amplifier 18 and is then emitted.

As a result, from the near-infrared pulsed light source 10A including the first near-infrared light source 11, the first intensity modulator 12, the second intensity modulator 13, the third amplifier 17, and the fourth amplifier 18 is emitted the near-infrared pulsed light having an angular frequency $\omega 1$, whose pulse width is 1ns or less and whose extinction ratio is greater than or equal to (the pulse duty ratio (dB) + 10(dB)) after the near-infrared pulsed light has been acquired as a result of performing the pulse modulation on the near-infrared laser light of wavelength longer than 1,240nm.

The near-infrared pulsed light emitted from the near-infrared pulsed light source 10A is incident, as the first near-infrared light, on the nonlinear optical crystal 31 in the terahertz wave generation system 30 via the first incidence optical system 16.

On the other hand, the second near-infrared laser light system 20 operates in the same way as the second near-infrared laser light system 20 in the terahertz wave generation device according to Embodiment 1.

The terahertz wave generation system 30 also operates in the same way as the terahertz wave generation system 30 in the terahertz wave generation device according to Embodiment 1, the nonlinear optical crystal 31 on which the first near-infrared light of the angular frequency $\omega 1$ which is the near-infrared pulsed light emitted from the first near-infrared laser light system 10 and the second near-infrared light of angular frequency $\omega 2$ which is the near-infrared laser light emitted from the second near-infrared laser light system 20 are incident generates a terahertz wave of angular frequency $\omega T$ and third near-infrared light of angular frequency $\omega 3$, and the high-intensity terahertz wave of the angular frequency $\omega T$ is extracted by a terahertz wave extraction element 32 and is emitted from the terahertz wave generation system 30.

As mentioned above, the near-infrared pulsed light source 10A in the terahertz wave generation device according to Embodiment 2 also provides the same advantageous effect as that provided by the near-infrared pulsed light source 10A in the terahertz wave generation device according to Embodiment 1, and the terahertz wave generation device according to Embodiment 2 also provides the same advantageous effect as that provided by the terahertz wave generation device according to Embodiment 1.

In addition, the near-infrared pulsed light source 10A in the terahertz wave generation device according to Embodiment 2 can suppress the generation of ASE in the third amplifier 17 and perform efficient amplification by means of the third amplifier 17 disposed between the first intensity modulator 12 and the second intensity modulator 13, thereby being able to emit high-efficiency and high-intensity near-infrared pulsed light from the pulse modulator which is constituted by the first intensity modulator 12, the second intensity modulator 13, and the third amplifier 17.

The terahertz wave generation device according to Embodiment 2 including the near-infrared pulsed light source 10A which is configured in this way can acquire a terahertz wave of a single frequency with a high degree of efficiency using the is-TPG method.

Embodiment 3.

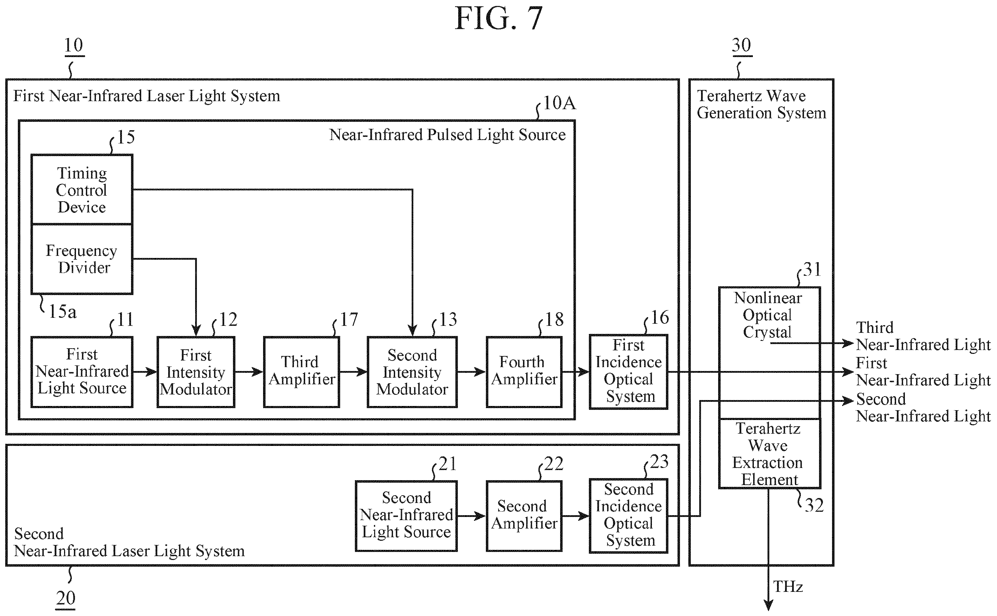

A terahertz wave generation device according to Embodiment 3 will be explained on the basis of FIG. 7.

The terahertz wave generation device according to Embodiment 3 differs from the terahertz wave generation device according to Embodiment 2 in that a timing control device 15 has a frequency divider 15a, while the terahertz wave generation device according to Embodiment 3 is the same as the terahertz wave generation device according to Embodiment 2 in other components.

In FIG. 7, the same reference signs as those in FIGS. 1 and 6 denote the same components or like components.

Hereinafter, an explanation will be made focusing on the timing control device 15 which differs from that in the terahertz wave generation device according to Embodiment 2.

The timing control device 15 outputs a first timing signal for determining the repetition frequency of near-infrared pulsed light from a second intensity modulator 13 to the second intensity modulator 13, and performs frequency division on the first timing signal, to output a second timing signal for determining the repetition frequency of near-infrared pulsed light from a first intensity modulator 12 to the first intensity modulator 12.

The timing control device 15 has a frequency divider 15a which performs the frequency division on the first timing signal, to output the second timing to the first intensity modulator 12.

More specifically, the timing control device 15 has a frequency divider 15a, and outputs the timing signals having different frequencies which are synchronized with each other, i.e. the first timing signal and the second timing signal which is acquired by the frequency divider 15a by performing the frequency division on the first timing signal to the first intensity modulator 12 and the second intensity modulator 13, respectively.

The timing control device 15 is a function generator which has the frequency division function (the frequency divider 15a).

Here, the repetition frequency f2 of the near-infrared pulsed light from the second intensity modulator 13 is set to be equal to the frequency f of a terahertz wave which is to be generated by a nonlinear optical crystal 31 in accordance with the first timing signal, and the repetition frequency f1 of the near-infrared pulsed light from the first intensity modulator 12 is set to be equal to n (a natural number greater than or equal to 2) times as high as the repetition frequency f2 of the near-infrared pulsed light from the second intensity modulator 13, i.e. $n \times f$ in accordance with the first timing signal on which the frequency division is performed by the frequency divider 15a.

When the first intensity modulator 12 is controlled using the first timing signal in such a way that the repetition frequency f1 of the near-infrared pulsed light from the first intensity modulator 12 becomes $n \times f$, the average power of the near-infrared pulsed light from the first intensity modulator 12 which is incident on a third amplifier 17 is n times as high compared with that in the case where the repetition frequency f1 of the near-infrared pulsed light from the first intensity modulator 12 is set to f.

As a result of multiplying the average power of the near-infrared pulsed light from the first intensity modulator 12 which is incident on the third amplifier 17 by a factor of n, the generation of ASE in the third amplifier 17 can be suppressed more strongly, and efficient amplification can be performed.

In the case where a first near-infrared light source 11 is caused to perform a QCW operation, the first near-infrared light source 11 is controlled using the second timing signal from the frequency divider 15a in the timing control device 15.

Further, also in the case where the third amplifier 17 is caused to perform a QCW operation, the third amplifier 17 is controlled using the second timing signal from the frequency divider 15a in the timing control device 15.

Because the operation of the terahertz wave generation device according to Embodiment 3 is substantially the same as the operation of the terahertz wave generation device according to Embodiment 2, with the exception that the control to set the second timing signal from the frequency divider 15a is performed in such a way that the repetition frequency f1 of the near-infrared pulsed light from the first intensity modulator 12 becomes $n \times f$, an explanation of the operation will be omitted hereinafter.

As mentioned above, the near-infrared pulsed light source 10A in the terahertz wave generation device according to Embodiment 3 also provides the same advantageous effect as that provided by the near-infrared pulsed light source 10A in the terahertz wave generation device according to Embodiment 2, and the terahertz wave generation device according to Embodiment 3 also provides the same advantageous effect as that provided by the terahertz wave generation device according to Embodiment 2.

In addition, because the near-infrared pulsed light source 10A in the terahertz wave generation device according to Embodiment 3 can cause the near-infrared pulsed light having high average power from the first intensity modulator 12 to be incident on the third amplifier 17, the generation of ASE in the third amplifier 17 can be suppressed and efficient amplification can be performed, thereby being able to emit high-efficiency and high-intensity near-infrared pulsed light from the pulse modulator which is constituted by the first intensity modulator 12, the second intensity modulator 13, and the third amplifier 17.

The terahertz wave generation device according to Embodiment 3 including the near-infrared pulsed light source 10A which is configured in this way can acquire a terahertz wave of a single frequency with a high degree of efficiency using the is-TPG method.

It is to be understood that an arbitrary combination of embodiments can be made, a change can be made in an arbitrary component of each of the embodiments, or an arbitrary component in each of the embodiments can be omitted.

## INDUSTRIAL APPLICABILITY

The near-infrared pulsed light source according to the present disclosure can be used in various fields including a basic science field, an engineering field, and a medical biotechnology field, and can be used for various types of laser systems.

The terahertz wave generation device including the near-infrared pulsed light source according to the present disclosure can be applied as a terahertz wave generation device that outputs higher average power.

Further, because the terahertz generation device according to the present disclosure including the near-infrared pulsed light source, and the second near-infrared light source that emits second near-infrared light beams having multiple angular frequencies can cause the frequency of a terahertz wave to be a single one and to be variable, the terahertz generation device is suitable for applications including spectroscopy using a terahertz wave.

## REFERENCE SIGNS LIST

10: First near-infrared laser light system, 10A: Near-infrared pulsed light source, 11: First near-infrared light source, 12: First intensity modulator, 13: Second intensity modulator, 14: First amplifier, 15: Timing control device, 15a: Frequency divider, 16: First incidence optical system, 17: Third amplifier, 18: Fourth amplifier, 20: Second near-infrared laser light system, 21: Second near-infrared light source, 22: Second amplifier, 23: Second incidence optical system, 24: Achromatic optical system, 24a: Wavelength dispersion element, 24b: Lens pair, 30: Terahertz wave generation system, 31: Nonlinear optical crystal, and 32: Terahertz wave extraction element

## Claims

1. A near-infrared pulsed light source (10A) comprising:

   a first near-infrared light source (11) to emit near-infrared laser light which is a continuous wave of wavelength longer than 1,240nm; and
   a pulse modulator to modulate the near-infrared laser light from the first near-infrared light source (11) with pulses, and to emit, as first near-infrared light, near-infrared pulsed light whose pulse width is less than or equal to one nanosecond, and whose extinction ratio is at least 10dB higher than a pulse duty ratio (dB) which is a ratio of a pulse width of each of the pulses and a period of the pulses.

2. The near-infrared pulsed light source (10A) according to claim 1, wherein the pulse modulator has:

   a first intensity modulator (12) to emit near-infrared pulsed light pulse-modulated by pulses each having a pulse width less than or equal to one nanosecond, the near-infrared pulsed light having a repetition frequency, and
   a second intensity modulator (13) to modulate near-infrared laser light with an extinction ratio greater than or equal to 40dB.

3. The near-infrared pulsed light source (10A) according to claim 2, wherein the first intensity modulator (12) is a high-speed amplitude modulator which uses an electrooptic modulator, and the second intensity modulator (13) is a high-extinction-ratio amplitude modulator which uses an acousto-optic modulator or a semiconductor light amplifier.

4. The near-infrared pulsed light source (10A) according to claim 2 or 3, wherein the near-infrared pulsed light source (10A) further comprises a timing control device (15) to perform control of matching an emission timing of the near-infrared pulsed light from the first intensity modulator (12) to an emission timing of the near-infrared pulsed light from the second intensity modulator (13).

5. The near-infrared pulsed light source (10A) according to claim 2 or 3, wherein the near-infrared pulsed light source (10A) further comprises a timing control device (15) to perform control of matching an emission timing of the near-infrared pulsed light from the first intensity modulator (12) to an emission timing of the near-infrared pulsed light from the second intensity modulator (13), and to perform control of matching an emission timing of near-infrared laser light in which a continuous wave from the first near-infrared light source (11) is provided as a quasi continuous wave to both the emission timing of the near-infrared pulsed light from the first intensity modulator (12) and the emission timing of the near-infrared pulsed light from the second intensity modulator (13).

6. The near-infrared pulsed light source (10A) according to claim 2 or 3, wherein the near-infrared pulsed light source (10A) further comprises a timing control device (15) having a frequency divider (15a) to output a first timing signal for determining a repetition frequency of the near-infrared pulsed light from the second intensity modulator (13) to the second intensity modulator (13), and to perform frequency division on the first timing signal, to output a second timing signal, the timing control device (15) outputting the second timing signal from the frequency divider (15a) to the first intensity modulator (12), to determine a repetition frequency of the near-infrared pulsed light from the first intensity modulator (12).

7. The near-infrared pulsed light source (10A) according to any one of claims 1 to 6, wherein the near-infrared pulsed light source (10A) further comprises a first amplifier (14) to amplify the near-infrared pulsed light from the pulse modulator.

8. The near-infrared pulsed light source (10A) according to claim 7, wherein the first amplifier (14) is configured as a combination of a fiber amplifier and an amplifier in free space.

9. The near-infrared pulsed light source (10A) according to any one of claims 2 to 6, wherein the near-infrared pulsed light source (10A) further comprises a third amplifier (17) disposed between the first intensity modulator (12) and the second intensity modulator (13), to amplify near-infrared pulsed light.

10. A terahertz wave generation device comprising:

   a first near-infrared laser light system (10) having the near-infrared pulsed light source (10A) according any one of claims 1 to 9;
   a second near-infrared laser light system (20) having a second near-infrared light source (21) to emit second near-infrared light; and
   a terahertz wave generation system (30) having a nonlinear optical crystal (31) on which both the first near-infrared light from the near-infrared pulsed light source (10A) and the second near-infrared light from the second near-infrared light source (21) are incident, to generate a terahertz wave of angular frequency having a value acquired by subtracting an angular frequency of the second near-infrared light from an angular frequency of the first near-infrared light, wherein
   the terahertz wave generation system (30) is configured to generate the terahertz wave using a photoinjection-type terahertz parametric generation method.

11. The terahertz wave generation device according to claim 10, wherein the nonlinear optical crystal (31) is lithium niobate.

12. The terahertz wave generation device according to claim 10 or 11, wherein the first near-infrared light from the first near-infrared laser light system (10) which is incident on the nonlinear optical crystal (31) and the terahertz wave generated by the nonlinear optical crystal (31) have intensity which exceeds that given by Manley-Rowe relations.

13. The terahertz wave generation device according to claim 10 or 11, wherein the nonlinear optical crystal (31) amplifies the second near-infrared light, and generates third near-infrared light of angular frequency which is another value acquired by subtracting the angular frequency having the value, which is acquired by subtracting the angular frequency of the second near-infrared light from the angular frequency of the first near-infrared light, from the angular frequency of the second near-infrared light.

14. The terahertz wave generation device according to any one of claims 10 to 13, wherein the second near-infrared light from the second near-infrared light source (21) is a continuous wave.

15. The terahertz wave generation device according to any one of claims 10 to 14, wherein the second near-infrared laser light system (20) has a second amplifier to amplify the second near-infrared light from the second near-infrared light source (21).

16. The terahertz wave generation device according to any one of claims 10 to 15, wherein

the second near-infrared light source (21) emits multiple second near-infrared light beams having different angular frequencies, and wherein
the second near-infrared laser light system (20) has an achromatic optical system (24) provided with a wavelength dispersion element to change an angle of emergence of the second near-infrared light emitted thereby depending on a wavelength and the angular frequency of the second near-infrared light from the second near-infrared light source, and to emit the second near-infrared light to the nonlinear optical crystal (31).


**Patentansprüche**

1. Nahinfrarot-Pulslichtquelle (10A), umfassend:

eine erste Nahinfrarot-Lichtquelle (11), um Nahinfrarot-Laserlicht, das eine kontinuierliche Welle mit einer Wellenlänge von mehr als 1.240 nm ist, zu emittieren; und
einen Pulsmodulator, um das Nahinfrarot-Laserlicht von der ersten Nahinfrarot-Lichtquelle (11) mit Pulsen zu modulieren, und Nahinfrarot-Pulslicht als erstes Nahinfrarotlicht zu emittieren, dessen Pulsbreite kleiner oder gleich einer Nanosekunde ist, und dessen Extinktionsverhältnis zumindest 10 dB höher ist als ein Tastverhältnis (dB), das ein Verhältnis aus einer Pulsbreite jedes der Pulse und einer Periode der Pulse ist.

2. Nahinfrarot-Pulslichtquelle (10A) nach Anspruch 1, wobei der Pulsmodulator aufweist:

einen ersten Intensitätsmodulator (12), um Nahinfrarot-Pulslicht, das durch Pulse mit einer Pulsbreite, die jeweils kleiner als oder gleich einer Nanosekunde ist, pulsmoduliert ist, zu emittieren, wobei das Nahinfrarot-Pulslicht eine Wiederholungsfrequenz aufweist, und
einen zweiten Intensitätsmodulator (13), um Nahinfrarot-Laserlicht mit einem Extinktionsverhältnis größer als oder gleich 40 dB zu modulieren.

3. Nahinfrarot-Pulslichtquelle (10A) nach Anspruch 2, wobei der erste Intensitätsmodulator (12) ein Hochgeschwindigkeits-Amplitudenmodulator ist, der einen elektro-optischen Modulator nutzt, und der zweite Intensitätsmodulator (13) ein Amplitudenmodulator mit hohem Extinktionsverhältnis ist, der einen akusto-optischen Modulator oder einen Halbleiter-Lichtverstärker nutzt.

4. Nahinfrarot-Pulslichtquelle (10A) nach Anspruch 2 oder 3, wobei die Nahinfrarot-Pulslichtquelle (10A) ferner eine Zeitsteuerungseinrichtung (15) umfasst, um eine Steuerung des Abgleichens eines Emissionszeitpunkts des Nahinfrarot-Pulslichts von dem ersten Intensitätsmodulator (12) mit einem Emissionszeitpunkt des Nahinfrarot-Pulslichts von dem zweiten Intensitätsmodulator (13) durchzuführen.

5. Nahinfrarot-Pulslichtquelle (10A) nach Anspruch 2 oder 3, wobei die Nahinfrarot-Pulslichtquelle (10A) ferner eine Zeitsteuerungseinrichtung (15) umfasst, um eine Steuerung des Abgleichens eines Emissionszeitpunkts des Nahinfrarot-Pulslichts von dem ersten Intensitätsmodulator (12) mit einem Emissionszeitpunkt des Nahinfrarot-Pulslichts von dem zweiten Intensitätsmodulator (13) durchzuführen, und um eine Steuerung des Abgleichens eines Emissionszeitpunkts von Nahinfrarot-Laserlicht, bei dem eine kontinuierliche Welle von der ersten Nahinfrarot-Lichtquelle (11) als quasi-kontinuierliche Welle bereitgestellt wird, mit beiden, dem Emissionszeitpunkt des Nahinfrarot-Pulslichts von dem ersten Intensitätsmodulator (12) und dem Emissionszeitpunkt des Nahinfrarot-Pulslichts von dem zweiten Intensitätsmodulator (13) durchzuführen.

6. Nahinfrarot-Pulslichtquelle (10A) nach Anspruch 2 oder 3, wobei die Nahinfrarot-Pulslichtquelle (10A) ferner eine Zeitsteuerungseinrichtung (15) mit einem Frequenzteiler (15a) umfasst, um ein erstes Zeitsignal zur Bestimmung einer Wiederholungsfrequenz des Nahinfrarot-Pulslichts von dem zweiten Intensitätsmodulator (13) an den zweiten Intensitätsmodulator (13) auszugeben, und um eine Frequenzteilung auf das erste Zeitsignal durchzuführen, um ein zweites Zeitsignal auszugeben, wobei die Zeitsteuerungseinrichtung (15) das zweite Zeitsignal von dem Frequenzteiler (15a) an den ersten Intensitätsmodulator (12) ausgibt, um eine Wiederholungsfrequenz des Nahinfrarot-Pulslichts von dem ersten Intensitätsmodulator (12) zu bestimmen.

7. Nahinfrarot-Pulslichtquelle (10A) nach einem der Ansprüche 1 bis 6, wobei die Nahinfrarot-Pulslichtquelle (10A) ferner einen ersten Verstärker (14) umfasst, um das Nahinfrarot-Pulslicht von dem Pulsmodulator zu verstärken.

8. Nahinfrarot-Pulslichtquelle (10A) nach Anspruch 7, wobei der erste Verstärker (14) als eine Kombination aus einem Faserverstärker und einem Verstärker im freien Raum konfiguriert ist.

9. Nahinfrarot-Pulslichtquelle (10A) nach einem der Ansprüche 2 bis 6, wobei die Nahinfrarot-Pulslichtquelle (10A) ferner einen dritten Verstärker (17) umfasst, der zwischen dem ersten Intensitätsmodulator (12) und dem zweiten Intensitätsmodulator (13) angeordnet ist, um Nahinfrarot-Pulslicht zu verstärken.

10. Terahertzwellen-Erzeugungseinrichtung, umfassend:

ein erstes Nahinfrarot-Laserlichtsystem (10), aufweisend die Nahinfrarot-Pulslichtquelle (10A) gemäß einem der Ansprüche 1 bis 9;
ein zweites Nahinfrarot-Laserlichtsystem (20), aufweisend eine zweite Nahinfrarot-Lichtquelle (21), um zweites Nahinfrarotlicht zu emittieren; und
ein Terahertzwellen-Erzeugungssystem (30), aufweisend einen nichtlinearen optischen Kristall (31), auf den beide, das erste Nahinfrarotlicht von der Nahinfrarot-Pulslichtquelle (10A) und das zweite Nahinfrarotlicht von der zweiten Nahinfrarot-Lichtquelle (21) einfallen, um eine Terahertzwelle mit einer Winkelfrequenz zu erzeugen, deren Wert durch Subtrahieren einer Winkelfrequenz des zweiten Nahinfrarotlichts von einer Winkelfrequenz des ersten Nahinfrarotlichts bezogen wird, wobei
das Terahertzwellen-Erzeugungssystem (30) eingerichtet ist, die Terahertzwelle unter Verwendung eines parametrischen Terahertz-Erzeugungsverfahrens vom Photoinjektionstyp zu erzeugen.

11. Terahertzwellen-Erzeugungseinrichtung nach Anspruch 10, wobei der nichtlineare optische Kristall (31) Lithiumniobat ist.

12. Terahertzwellen-Erzeugungseinrichtung nach Anspruch 10 oder 11, wobei das erste Nahinfrarotlicht aus dem ersten Nahinfrarot-Laserlichtsystem (10), das auf den nichtlinearen optischen Kristall (31) auftrifft, und die von dem nichtlinearen optischen Kristall (31) erzeugte Terahertzwelle eine Intensität aufweisen, welche die durch die Manley-Rowe-Beziehungen gegebene Intensität übersteigt.

13. Terahertzwellen-Erzeugungseinrichtung nach Anspruch 10 oder 11, wobei der nichtlineare optische Kristall (31) das zweite Nahinfrarotlicht verstärkt, und ein drittes Nahinfrarotlicht mit einer Winkelfrequenz erzeugt, die ein anderer Wert ist, der durch Subtrahieren der Winkelfrequenz mit dem Wert, der durch Subtrahieren der Winkelfrequenz des zweiten Nahinfrarotlichts von der Winkelfrequenz des ersten Nahinfrarotlichts bezogen wird, von der Winkelfrequenz des zweiten Nahinfrarotlichts bezogen wird.

14. Terahertzwellen-Erzeugungseinrichtung nach einem der Ansprüche 10 bis 13, wobei das zweite Nahinfrarotlicht von der zweiten NahinfrarotLichtquelle (21) eine kontinuierliche Welle ist.

15. Terahertzwellen-Erzeugungseinrichtung nach einem der Ansprüche 10 bis 14, wobei das zweite Nahinfrarot-Laserlichtsystem (20) einen zweiten Verstärker aufweist, um das zweite Nahinfrarotlicht von der zweiten Nahinfrarotlichtquelle (21) zu verstärken.

16. Terahertzwellen-Erzeugungseinrichtung nach einem der Ansprüche 10 bis 15, wobei

die zweite Nahinfrarotlichtquelle (21) mehrere zweite Nahinfrarotlichtstrahlen, aufweisend unterschiedliche Winkelfrequenzen, emittiert, und wobei
das zweite Nahinfrarot-Laserlichtsystem (20) ein achromatisches optisches System (24) aufweist, das mit einem Wellenlängendispersionselement ausgestattet ist, um einen Austrittswinkel des dabei emittierten zweiten Nahinfrarotlichts in Abhängigkeit von einer Wellenlänge und der Winkelfrequenz des zweiten Nahinfrarotlichts von der zweiten Nahinfrarotlichtquelle zu ändern, und um das zweite Nahinfrarotlicht auf den nichtlinearen optischen Kristall (31) zu emittieren.

**Revendications**

1. Source de lumière pulsée proche infrarouge (10A) comprenant :

   une première source de lumière proche infrarouge (11) pour émettre une lumière laser proche infrarouge qui est une onde continue de longueur d'onde supérieure à 1240 nm ; et
   un modulateur d'impulsions pour moduler la lumière laser proche infrarouge provenant de la première source de lumière proche infrarouge (11) avec des impulsions, et pour émettre, en tant que première lumière proche infrarouge, une lumière pulsée proche infrarouge dont la largeur d'impulsion est inférieure ou égale à une nanoseconde, et dont le rapport d'extinction est au moins 10 dB supérieur à un rapport cyclique d'impulsions (dB) qui est un rapport d'une largeur d'impulsion de chacune des impulsions et d'une période des impulsions.

2. Source de lumière pulsée proche infrarouge (10A) selon la revendication 1, dans laquelle le modulateur d'impulsions présente :

   un premier modulateur d'intensité (12) pour émettre une lumière pulsée proche infrarouge modulée par des impulsions présentant chacune une largeur d'impulsion inférieure ou égale à une nanoseconde, la lumière pulsée proche infrarouge présentant une fréquence de répétition, et
   un second modulateur d'intensité (13) pour moduler la lumière laser proche infrarouge avec un rapport d'extinction supérieur ou égal à 40 dB.

3. Source de lumière pulsée proche infrarouge (10A) selon la revendication 2, dans lequel le premier modulateur d'intensité (12) est un modulateur d'amplitude à grande vitesse qui utilise un modulateur électro-optique et le second modulateur d'intensité (13) est un modulateur d'amplitude à rapport d'extinction élevé qui utilise un modulateur acousto-optique ou un amplificateur de lumière à semi-conducteur.

4. Source de lumière pulsée proche infrarouge (10A) selon la revendication 2 ou 3, dans lequel la source de lumière pulsée proche infrarouge (10A) comprend en outre un dispositif de commande de synchronisation (15) pour effectuer une commande de mise en correspondance d'une synchronisation d'émission de la lumière pulsée proche infrarouge provenant du premier modulateur d'intensité (12) à une synchronisation d'émission de la lumière pulsée proche infrarouge provenant du second modulateur d'intensité (13).

5. Source de lumière pulsé proche infrarouge (10A) selon la revendication 2 ou 3, dans lequel la source de lumière pulsé proche infrarouge (10A) comprend en outre un dispositif de commande de synchronisation (15) pour effectuer une commande de mise en correspondance d'une synchronisation d'émission de la lumière pulsée proche infrarouge provenant du premier modulateur d'intensité (12) à une synchronisation d'émission de la lumière pulsée proche infrarouge provenant du second modulateur d'intensité (13), et pour effectuer une commande de mise en correspondance d'une synchronisation d'émission de lumière laser proche infrarouge dans laquelle une onde continue provenant de la première source de lumière proche infrarouge (11) est fournie sous la forme d'une onde quasi continue à la fois à la synchronisation d'émission de la lumière pulsée proche infrarouge provenant du premier modulateur d'intensité (12) et à la synchronisation d'émission de la lumière pulsée proche infrarouge provenant du second modulateur d'intensité (13).

6. Source de lumière pulsée proche infrarouge (10A) selon la revendication 2 ou 3, dans laquelle la source de lumière pulsée proche infrarouge (10A) comprend en outre un dispositif de commande de synchronisation (15) présentant un diviseur de fréquence (15a) pour délivrer en sortie un premier signal de synchronisation pour déterminer une fréquence de répétition de la lumière pulsée proche infrarouge du second modulateur d'intensité (13) au second modulateur d'intensité (13), et pour effectuer une division de fréquence sur le premier signal de synchronisation, pour délivrer en sortie un second signal de synchronisation, le dispositif de commande de synchronisation (15) délivrant en sortie le second signal de synchronisation du diviseur de fréquence (15a) au premier modulateur d'intensité (12), pour déterminer une fréquence de répétition de la lumière pulsée proche infrarouge provenant du premier modulateur d'intensité (12).

7. Source de lumière pulsée proche infrarouge (10A) selon l'une quelconque des revendications 1 à 6, dans laquelle la source de lumière pulsée proche infrarouge (10A) comprend en outre un premier amplificateur (14) pour amplifier la lumière pulsée proche infrarouge provenant du modulateur d'impulsions.

8. Source de lumière pulsée proche infrarouge (10A) selon la revendication 7, dans laquelle le premier amplificateur (14) est configuré sous la forme d'une combinaison d'un amplificateur à fibre et d'un amplificateur en espace libre.

9. Source de lumière pulsée proche infrarouge (10A) selon l'une quelconque des revendications 2 à 6, dans lequel la source de lumière pulsée proche infrarouge (10A) comprend en outre un troisième amplificateur (17) disposé entre le premier modulateur d'intensité (12) et le second modulateur d'intensité (13), pour amplifier la lumière pulsée proche infrarouge.

10. Dispositif de génération d'onde térahertz comprenant :

un premier système de lumière laser proche infrarouge (10) présentant la source de lumière pulsée proche infrarouge (10A) selon l'une quelconque des revendications 1 à 9 ;
un second système de lumière laser proche infrarouge (20) présentant une seconde source de lumière proche infrarouge (21) pour émettre une deuxième lumière proche infrarouge ; et
un système de génération d'onde térahertz (30) présentant un cristal optique non linéaire (31) sur lequel à la fois la première lumière proche infrarouge provenant de la source de lumière pulsée proche infrarouge (10A) et la deuxième lumière proche infrarouge provenant de la seconde source de lumière proche infrarouge (21) sont incidentes, pour générer une onde térahertz de fréquence angulaire présentant une valeur acquise en soustrayant une fréquence angulaire de la deuxième lumière proche infrarouge à partir d'une fréquence angulaire de la première lumière proche infrarouge, dans lequel
le système de génération d'onde térahertz (30) est configuré pour générer l'onde térahertz en utilisant un procédé de génération paramétrique de térahertz de type photo-injection.

11. Dispositif de génération d'onde térahertz selon la revendication 10, dans lequel le cristal optique non linéaire (31) est du niobate de lithium.

12. Dispositif de génération d'onde térahertz selon la revendication 10 ou 11, dans lequel la première lumière proche infrarouge provenant du premier système de lumière laser proche infrarouge (10) qui est incidente sur le cristal optique non linéaire (31) et l'onde térahertz générée par le cristal optique non linéaire (31) présentent une intensité qui dépasse celle donnée par les relations de Manley-Rowe.

13. Dispositif de génération d'onde térahertz selon la revendication 10 ou 11, dans lequel le cristal optique non linéaire (31) amplifie la deuxième lumière proche infrarouge, et génère une troisième lumière proche infrarouge de fréquence angulaire qui est une autre valeur acquise en soustrayant la fréquence angulaire présentant la valeur, qui est acquise en soustrayant la fréquence angulaire de la deuxième lumière proche infrarouge à partir de la fréquence angulaire de la première lumière proche infrarouge, à partir de la fréquence angulaire de la deuxième lumière proche infrarouge.

14. Dispositif de génération d'onde térahertz selon l'une quelconque des revendications 10 à 13, dans lequel la deuxième lumière proche infrarouge provenant de la seconde source de lumière proche infrarouge (21) est une onde continue.

15. Dispositif de génération d'onde térahertz selon l'une quelconque des revendications 10 à 14, dans lequel le second système de lumière laser proche infrarouge (20) présente un deuxième amplificateur pour amplifier la deuxième lumière proche infrarouge provenant de la seconde source de lumière proche infrarouge (21).

16. Dispositif de génération d'onde térahertz selon l'une quelconque des revendications 10 à 15, dans lequel

la seconde source de lumière proche infrarouge (21) émet de multiples seconds faisceaux de lumière proche infrarouge présentant des fréquences angulaires différentes, et dans lequel
le second système de lumière laser proche infrarouge (20) présente un système optique achromatique (24) pourvu d'un élément de dispersion de longueur d'onde pour modifier un angle d'émergence de la deuxième lumière proche infrarouge ainsi émise en fonction d'une longueur d'onde et de la fréquence angulaire de la deuxième lumière proche infrarouge provenant de la seconde source de lumière proche infrarouge, et pour émettre la deuxième lumière proche infrarouge vers le cristal optique non linéaire (31).

# FIG. 1

First Near-Infrared Laser Light System **10**

Near-Infrared Pulsed Light Source **10A**

- Timing Control Device **15**
- First Near-Infrared Light Source **11**
- First Intensity Modulator **12**
- Second Intensity Modulator **13**
- First Amplifier **14**
- First Incidence Optical System **16**

Second Near-Infrared Laser Light System **20**

- Second Near-Infrared Light Source **21**
- Second Amplifier **22**
- Second Incidence Optical System **23**

Terahertz Wave Generation System **30**

- Nonlinear Optical Crystal **31**
- Terahertz Wave Extraction Element **32**

Third Near-Infrared Light

First Near-Infrared Light

Second Near-Infrared Light

THz

EP 4 386 472 B1

# FIG. 2A

1ns or Less
(0.5ns)

Transmittance by
First Intensity
Modulator

20dB or More
(20dB−40dB)

# FIG. 2B

10ns

Transmittance by
Second Intensity
Modulator

40dB or More

# FIG. 2C

1ns or Less
(0.5ns)

Transmittance by
Combination of
Modulators

20dB or More
(20dB−40dB)

(Duty Ratio+10dB)
or More
(60dB or More)

40dB
or More

10ns

# FIG. 3

# FIG. 4A

(a): $\omega_T = f_1 THz$

# FIG. 4B

(b): $\omega_T = f_2 THz$

EP 4 386 472 B1

# FIG. 5

30

32

Terahertz Wave
Extraction Element

Second Near-Infrared Light

20

Terahertz Wave

10

First Near-Infrared Light

Nonlinear Optical Crystal

31

Third Near-Infrared Light

# FIG. 6

First Near-Infrared Laser Light System — 10

Near-Infrared Pulsed Light Source — 10A

Timing Control Device — 15

First Near-Infrared Light Source — 11

First Intensity Modulator — 12

Third Amplifier — 17

Second Intensity Modulator — 13

Fourth Amplifier — 18

First Incidence Optical System — 16

Second Near-Infrared Laser Light System — 20

Second Near-Infrared Light Source — 21

Second Amplifier — 22

Second Incidence Optical System — 23

Terahertz Wave Generation System — 30

Nonlinear Optical Crystal — 31

Terahertz Wave Extraction Element — 32

Third Near-Infrared Light

First Near-Infrared Light

Second Near-Infrared Light

THz

# FIG. 7

First Near-Infrared Laser Light System (10)

Near-Infrared Pulsed Light Source (10A)

- Timing Control Device (15)
- Frequency Divider (15a)
- First Near-Infrared Light Source (11)
- First Intensity Modulator (12)
- Third Amplifier (17)
- Second Intensity Modulator (13)
- Fourth Amplifier (18)
- First Incidence Optical System (16)

Second Near-Infrared Laser Light System (20)

- Second Near-Infrared Light Source (21)
- Second Amplifier (22)
- Second Incidence Optical System (23)

Terahertz Wave Generation System (30)

- Nonlinear Optical Crystal (31)
- Terahertz Wave Extraction Element (32)

Third Near-Infrared Light
First Near-Infrared Light
Second Near-Infrared Light
THz

EP 4 386 472 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019035789 A
- US 2020183251 A1

**Non-patent literature cited in the description**

- **KHAN et al.** Ultra-sensitive, room-temperature THz detection based on parametric upconversion by using a pulsed 1550nm optical source. *Proc. SPIE 7917, Nonlinear Frequency Generation and Conversion: Materials, Devices, and Applications X*, 21 February 2011, 791711
- **STAUS et al.** Continuously phase-matched terahertz difference frequency generation in an embedded-waveguide structure supporting only fundamental modes. *Opt Express*, 18 August 2008, vol. 16 (17), 13296-303
- **NAWATA et al.** Effective Terahertz Wave Parametric Generation Depending on the Pump Pulse Width Using a LiNbO3 Crystal. *IEEE Transactions on Terahertz Science and Technology*, September 2017, vol. 7 (5), 617-620
- **M. IMLAU et al.** Optical nonlinearities of small polarons in lithium niobate. *Applied Physics Review*, 2015, vol. 2, 040606